# EUROPEAN PATENT SPECIFICATION

(11) **EP 1 929 087 B1**
(45) Date of publication and mention of the grant of the patent: **24.07.2013**
(21) Application number: 06851536.0
(22) Date of filing: 01.09.2006
(51) Int. Cl.: D21H 13/50, D21H 13/40, D21H 15/02, B82B 3/00

(54) **LARGE SCALE MANUFACTURING OF NANOSTRUCTURED MATERIAL**
MASSENFERTIGUNG VON NANOSTRUKTURIERTEM MATERIAL
FABRICATION A GRANDE ECHELLE DE MATERIAU NANOSTRUCTURE

(30) Priority: 01.09.2005 US 712847 P
(43) Date of publication of application: 11.06.2008
(60) Divisional application: 12172630.1
(73) Proprietor: Seldon Technologies, Inc, Windsor, VT 05089 (US)
(72) Inventor: COOPER, Christopher H., Windsor, Vermont 05089 (US); CUMMINGS, Alan G., So. Woodstock, Vermont 05071 (US); STAROSTIN, Mikhail Y., Hanover, New Hampshire 03755 (US)
(74) Representative: Harris, Jennifer Lucy
(86) International application number: PCT/US2006/034225
(87) International publication number: WO 2007/149109

(56) References cited:
- WO-A-2004/097284
- US-A1- 2005 154 116

## Description

The present disclosure relates to an efficient method for manufacturing large quantities of a nanostructured material comprising carbon nanotubes with or without other components, such as glass fibers. The present disclosure relates more particularly to the continuous, semi-continuous and batch method of making nanostructured material that is based on a differential pressure filtration technique.

Most two-dimensional materials, such as webs, sheets, and the like, have inherent shortcomings in their material properties. While metals and plastics have long been favorites because of their wide range of versatility, for many applications higher strength to weight ratio, higher conductivity, larger surface area, higher tenability and overall higher performing materials are needed. Exotic lightweight, high strength materials used to be confined to high tech applications like space exploration and electronics, however, they are becoming increasingly important for mass applications in ballistic mitigation applications (such as bulletproof vests), heat sinks, fluid filtration, fluid separation, high efficiency electrodes for batteries capacitors and fuel cells, computer casings, car bodies, aircraft wings, machine parts, and many other applications.

The ability of nanostructured material, such as that comprising carbon nanotubes, to have a wide-ranging density, for example ranging from 1 picogram/cm³ to 20g/cm³, allows the material to be tailored for a wide variety of applications. Non-limiting examples of articles made from nano- structured material as described herein include fabrics, sheets, wires, structural supports or membranes for fluid purification. Electrical, mechanical and thermal properties associated with the carbon nanotube further allow the nanostructured materials to be used for higher performance mechanical actuators, heat sinks, thermal conductors or electrodes.

Given the acute need for materials with these improved performance characteristics in many applications there is a need for methods that produce these materials in large quantities. Accordingly, the present disclosure relates to a method of making a carbon nanotube nanostructured material in large quantities, such that the resulting product can be sized for a variety of applications from filter media to fabrics for electrical or mechanical uses.

### SUMMARY OF INVENTION

The following disclosure describes large-scale production methods for making large quantities of macro-scale, nanostructured material. As described below, the method can be a continuous or semi-continuous process that is based on the differential pressure filtration of a carrier fluid containing carbon nanotubes, with or without other components, including fibers, particles, and the like.

In one embodiment, the present disclosure relates to a method of making a nanostructured material comprising carbon nanotubes, said method comprising suspending carbon nanotubes in a carrier fluid to form a mixture, inducing the mixture to flow through a moving substrate that is permeable to the carrier fluid by differential pressure filtration, depositing the carbon nanotubes (and optional components such as glass fibers), from the mixture onto the moving substrate and applying a vacuum to the side of the substrate opposite of the deposition side to remove said carrier fluid, to form a nanostructured material whose components have an arrangement that has at least one characteristic length scale that is 100 nanometers or less. The large-scale nanostructured material is one having at least one dimension greater than 1 cm.

The present disclosure relates to a continuous or semi-continuous method for making a nanostructured material comprising carbon nanotubes. In an embodiment, the carbon nanotubes are deposited from the mixture onto a moving substrate to form a nanostructured material having a length greater than 1 meter. This embodiment enables very large nanostructured material to be formed, such as a material having at least one dimension greater than 1 meter, for example a length of hundreds or thousands of meters, and up to ten thousand meters.

The method described herein may be used to make a wide variety of novel products, such as a macro-scale, nanostructured material for filtering fluids. This method may be used to directly deposit a seamless nanostructured material onto a substrate that will become an integral part of the final product. In one embodiment, this method can be used to deposit macro-scale nanostructured material onto a filter media, such as a porous carbon block.

Aside from the subject matter discussed above, the present disclosure includes a number of other exemplary features such as those explained hereinafter. It is to be understood that both the foregoing description and the following description are exemplary only.

### BRIEF DESCRIPTION OF THE DRAWINGS

The accompanying figures are incorporated in, and constitute a part of this specification.

Fig. 1 is a schematic of a system for the continuous production of a nanostructured material according to the present disclosure.

Fig. 2 is a schematic of a continuous roto-former deposition system for the fabrication of a nanostructured material according to the present disclosure.

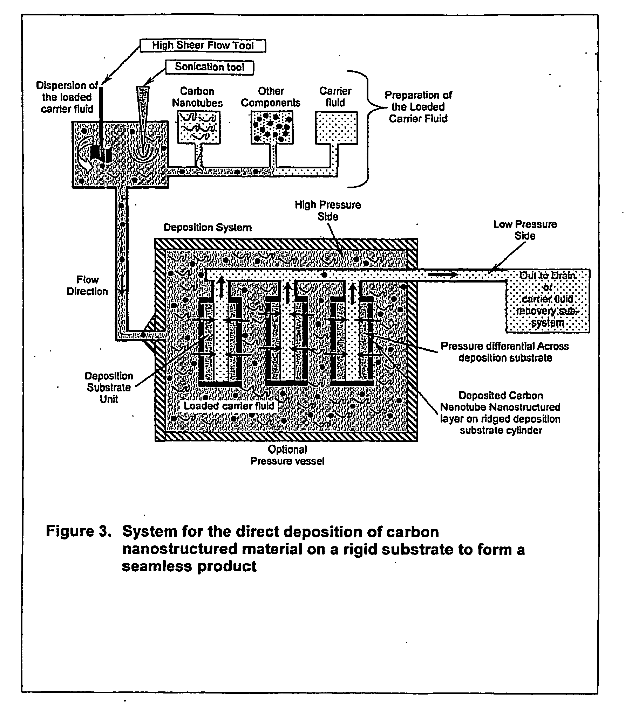

Fig. 3 is a schematic of a system for the direct deposition of nanostructured material on a rigid substrate to form a seamless product according to one embodiment of the present disclosure.

Fig. 4 is a schematic of a continuous wire type system for making a nanostructured material according to one embodiment of the present disclosure.

### DETAILED DESCRIPTION OF INVENTION

### A. Definitions

The following terms or phrases used in the present disclosure have the meanings outlined below:

The term "fiber" or any version thereof, is defined as a high aspect ratio material. Fibers used in the present disclosure may include materials comprised of one or many different compositions.

The term "nanotube" refers to a tubular-shaped, molecular structure generally having an average diameter in the inclusive range of 1-60 nm and an average length in the inclusive range of 0.1 µm to 250 mm.

The term "carbon nanotube" or any version thereof refers to a tubular-shaped, molecular structure composed primarily of carbon atoms arranged in a hexagonal lattice (a graphene sheet) which closes upon itself to form the walls of a seamless cylindrical tube. These tubular sheets can either occur alone (single-walled) or as many nested layers (multi-walled) to form the cylindrical structure.

The phrase "defective carbon nanotubes" refers to nanotubes that contain a lattice distortion in at least one carbon ring in at least one of the layers of the tubular structure.

The phrase "lattice distortion" means any distortion of the crystal lattice of carbon nanotube atoms forming the tubular sheet structure. Non-limiting examples include any displacements of atoms because of inelastic deformation, or presence of 5 or 7 member carbon rings, or chemical interaction followed by change in sp² hybridization of carbon atom bonds. Such defects or distortions may lead to a natural bend in the carbon nanotube.

The term "coat", "coating," or any version thereof is intended to mean a covering layer formed of discrete particles, a contiguous layer of material, or both. In other words, while it is possible, it is not necessary that the "coated" component contain a continuous covering layer for it to be considered a "coated" surface, but merely that it contains material covering a portion of the surface.

The term "functional group" is defined as any atom or chemical group that provides a specific behavior. The term "functionalized" is defined as adding a functional group(s) to the surface of the nanotubes and/or the additional fiber that may alter the properties of the nanotube, such as zeta potential.

The term "impregnated" is defined as the presence of other atoms or clusters inside of nanotubes. The phrase "filled carbon nanotube" is used interchangeably with "impregnated carbon nanotube."

The term "doped" is defined as the insertion or existence of atoms, other than carbon, in the nanotube crystal lattice.

The term "charged" is defined as the presence of non-compensated electrical charge, in or on the surface of the carbon nanotubes or the additional fibers.

The term "irradiated" is defined as the bombardment of the nanotubes, the fibers, or both with particles or photons such as x-rays with energy levels sufficient to cause inelastic change to the crystal lattice of the nanotube, fibers or both.

The terms "fused," "fusion," or any version of the word "fuse" is defined as the bonding of nanotubes, fibers, or combinations thereof, at their point or points of contact. For example, such bonding can be Carbon-Carbon chemical bonding including sp³ hybridization or chemical bonding of carbon to other atoms.

The terms "interlink," "interlinked," or any version of the word "link" is defined as the connecting of nanotubes and/or other fibers into a larger structure through mechanical, electrical or chemical forces. For example, such connecting can be due to the creation of a large, intertwined, knot-like structure that resists separation.

The terms "weaved," "woven" or any version of the word "weave" is defined as the interlacing of nanotubes and/or other fibers into a larger-scale material.

The terms "nanostructured" and "hano-scaled" refers to a structure or a material which possesses components having at least one dimension that is 100nm or smaller. A definition for nanostructure is provided in The Physics and Chemistry of Materials, Joel I. Gersten and Frederick W. Smith, Wiley publishers, p382-383, which is herein incorporated by reference for this definition.

The phrase "nanostructured material" refers to a material whose components have an arrangement that has at least one characteristic length scale that is 100 nanometers or less. The phrase "characteristic length scale" refers to a measure of the size of a pattern within the arrangement, such as but not limited to the characteristic diameter of the pores created within the structure, the interstitial distance between fibers or the distance between subsequent fiber crossings. This measurement may also be done through the methods of applied mathematics such as principle component or spectral analysis that give multi-scale information characterizing the length scales within the material.

The term "nanomesh" refers to a nanostructured material defined above, and that further is porous. For example, in one embodiment, a nanomesh material is generally used as a filter media, and thus must be porous or permeable to the fluid it is intended to purify.

The terms "large" or "macro" alone or in combination with "scale" refers to materials that comprise a nanostructured material, as defined above, that have been fabricated using the methods described herein to have at least two dimensions greater than 1 cm. Non-limiting examples of such macro-scale, nanostructured material is a sheet of nanostructured material that is 1 meter square or a roll of nanostructured material continuously fabricated to a length of at least 100 meters. Depending on the use, large or macro-scale is intended to mean larger than 10cm, or 100cm or even 1 meters, such as when used to define the size of material made via a batch process. When used to describe continuous or semi-continuous methods, large scale manufacturing can encompass the production of material having a length greater than a meter, such as greater than one meter and up to ten thousand meters long.

A "continuous method" refers to a method in which the deposition substrate continuously moves during the process until the fabrication of the nanostructured material is finished.

A "semi-continuous method" refers to a method in which the deposition substrate moves, in a stepwise fashion, during the fabrication process. Unlike the continuous process, the substrate can come to a stop during a semi-continuous method to allow a certain process to be performed, such as to allow multilayers to be deposited.

A "batch method" refers to a method in which the deposition substrate is stationary throughout the method.

The term "macro-material", is a material having the lengths described above, e.g., as made by "large scale" or "macro-scale" manufacturing process described above.

The phrase "selective deposition substrate" as used herein refers to a substrate that is substantially transparent to the carrier fluid and substantially opaque to the said carbon nanotube composite components. For example, a filtration material that allows water to flow through but does not allow the carbon nanotube components to pass would be considered a selective deposition substrate.

The phrase "active material" is defined as a material that is responsible for a particular activity, such as removing contaminants from the fluid, whether by physical, chemical, bio-chemical or catalytic means. Conversely, a "passive" material is defined as an inert type of material, such as one that does not exhibit chemical properties that contribute to the removal contaminants when used as a filter media.

The term "fluid" is 'intended to encompass liquids or gases.

The phrase "loaded carrier fluid," refers to a carrier fluid that further comprises at least carbon nanotubes, and the optional components described herein, such as glass fibers.

The term "contaminant(s)" means at least one unwanted or undesired element, molecule or organism in the fluid.

The term "removing" (or any version thereof) means destroying, modifying, or separating contaminants using at least one of the following mechanisms: particle size exclusion, absorption, adsorption, chemical or biological interaction or reaction.

The phrase "chemical or biological interaction or reaction" is understood to mean an interaction with the contaminant through either chemical or biological processes that renders the contaminant incapable of causing harm. Examples of this are reduction, oxidation, chemical denaturing, physical damage to microorganisms, bio-molecules, ingestion, and encasement.

The term "particle size" is defined by a number distribution, e.g., by the number of particles having a particular size. The method is typically measured by microscopic techniques, such as by a calibrated optical microscope, by calibrated polystyrene beads, by calibrated scanning probe microscope scanning electron microscope, or optical near field microscope. Methods of measuring particles of the sizes described herein are taught in Walter C. McCrone's et al., The Particle Atlas, (An encyclopedia of techniques for small particle identification), Vol. I, Principles and Techniques, Ed. 2 (Ann Arbor Science Pub.), which are herein incorporated by reference.

The phrases "chosen from" or "selected from" as used herein refers to selection of individual components or the combination of two (or more) components. For example, the nanostructured material can comprise carbon nanotubes that are only one of impregnated, functionalized, doped, charged, coated, and defective carbon nanotubes, or a mixture of any or all of these types of nanotubes such as a mixture of different treatments applied to the nanotubes.

### B. Methods of Making Nanostructured Materials

There is disclosed a method for making a nanostructured material from a carrier fluid based on a differential pressure technique. The method comprises suspending carbon nanotubes, and optionally other components, in a carrier fluid, depositing the carbon nanotubes onto a substrate that is permeable to the carrier fluid, and allowing the carrier fluid to flow through the substrate by differential pressure filtration to form a nanostructured material. The method described herein can be used to produce large or macro-sized materials, such as a material having at least one dimension greater than 1 cm, or even greater than 100 cm.

The method may further comprise removing the nanostructured material from the substrate. In this embodiment, the substrate may be removed by a simple separation technique, or may be removed by heating, or chemically dissolving the substrate.

Alternatively, the substrate remains as a permanent part of final product, with the nanotube nanostructured material attached to it.

The substrate that may be used in the present disclosure can be comprised of fibrous or non-fibrous materials. Non-limiting examples of such fibrous and non-fibrous materials include metals, polymers, ceramic, natural fibers, and combinations thereof. In one embodiment, such materials are optionally heat and/or pressure treated prior to the depositing of the carbon nanotubes.

The carrier fluid described herein can include at least one aqueous and non-aqueous liquid, at least one gas, or combinations thereof. When used, the aqueous liquid may have a pH ranging from 1 to 8.9.

The non-aqueous solvent is typically chosen from organic and inorganic solvents, or combinations thereof. Non-limiting examples of organic solvents include methanol, iso-propanol, ethanol, toluene, xylene, dimethylformamide, carbon tetrachloride, 1,2-dichlorobenzene, and combinations thereof.

In one embodiment, the carrier fluid is a gas, such as one comprised of air, nitrogen, oxygen, argon, carbon dioxide, water vapor, helium, neon, or any combination thereof.

In addition to carbon nanotubes, other components that may be included in the carrier fluid include fibers, clusters, and/or particulates composed of metals, polymers, ceramics, natural materials, and combinations thereof. Such optional components typically have at least one dimension ranging from 1 nm to 10nm.

In one embodiment, the carrier fluid further comprises chemical binding agents, such as polyvinyl alcohol, surfactants, buffering agents, poly-electrolytes, and combinations thereof. The carrier fluid may also or alternatively comprises biomaterials chosen from proteins, DNA, RNA, and combinations thereof.

Other components that may be added to the carrier fluid are molecules containing atoms chosen from antimony, aluminum, barium, boron, bromine, calcium, carbon, cerium, chlorine, chromium, cobalt, copper, fluorine, gallium, germanium, gold, hafnium, hydrogen, indium, iodine, iridium, iron, lanthanum, lead, magnesium, manganese, molybdenum, nickel, niobium, nitrogen, osmium, oxygen, palladium, phosphorus, platinum, rhenium, rhodium, ruthenium, scandium, selenium, silicon, silver, sulfur, tantalum, tin, titanium, tungsten, vanadium, yttrium, zinc, zirconium, or combination thereof.

The other components described herein may be pre-assembled and attached onto the carbon nanotubes, to other components, or to any combination thereof prior to the deposition step.

In one embodiment, the method disclosed herein can be used to form a multilayered structured by the sequential deposition of at least one nano-structured layer and at least one additional layer, which may or may not be nano-structured.

The method may further comprise the application of an acoustic field to obtain or maintain dispersion of the carbon nanotubes in the carrier fluid prior to the depositing step. Non-limiting examples of an acoustic field that may be used in the disclosed method is one having a frequency ranging from 10 kHz to 50 kHz.

It is also possible to disperse and or mix the carbon nanotubes in the carrier fluid by applying a high-shear flow field to the carrier fluid. This same process may be used to disperse and or mix the carbon nanotubes with other components, when present.

It is also possible to use a combination of an acoustic field with the previously mentioned frequency range and a high-shear flow field, either sequentially or in combination, to obtain or maintain dispersion of the carbon nanotubes in the carrier fluid prior to said depositing.

In various embodiments, the method further comprises treating the nanostructured material with at least one post-deposition treatment process. Non-limiting examples of such processes include (a) chemical treatment, such as adding a functional group, coating with another material (such as a polymer or metal) or both, (b) irradiation, such as exposing the nanostructured material to at least one radiation chosen from infrared radiation, electron-beams, ion beams, x-rays, photons, or any combinations of (a) and (b).

The post-deposition functionalization process described herein may comprise procedures chosen from: acid washing, surfactant treatments, molecular grafting, deposition of polyelectrolyte materials, coating, heating, spraying, chemical or electrolytic dipping, or combinations thereof.

The method described herein may further comprise finishing the nanostructered material to form a shape and size sufficient for a particular application. For example, finishing the nanostructured material comprises at least one method chosen from cutting, laminating, sealing, pressing, wrapping, or combinations thereof.

The disclosed method can be used in a continuous or semi-continuous fashion for making a nanostructured material. For example, the carbon nanotubes are deposited via a carrier fluid, onto a moving substrate that is permeable to the carrier fluid. This embodiment enables very large nanostructured materials to be continuously formed, such as a material having at least one dimension greater than 1 meter, including length up to hundred and even thousands of meters.

In one embodiment, the carrier fluid comprises a combination of carbon nanotubes and glass fibers. Glass fibers may be uncoated or coated with metal-oxygen compounds, such as those chosen from metal hydroxide Mₓ(OH)_{y}, oxyhydroxides MₓO_{y}(OH)_{z}, oxide MₓO_{y}, oxy-, hydroxy-, oxyhydroxy salts MₓO_{y}(OH)_{z}Aₙ.

In non-limiting embodiment, M is at least one cation chosen from Magnesium, Aluminum, Calcium, Titanium, Manganese, Iron, Cobalt, Nickel, Copper, Zinc or combinations of thereof.

In addition, A is at least one anion chosen from Hydride, Fluoride, Chloride, Bromide, Iodide, Oxide, Sulfide, Nitride, Sulfate, Thiosulfate, Sulfite, Perchlorate, Chlorate, Chlorite, Hypochlorite, Carbonate, Phosphate, Nitrate, Nitrite, Iodate, Bromate, Hypobromite, Boron, or combinations of thereof.

It has been discovered that the combination of carbon nanotubes and glass fibers coated with metal-oxygen compounds provide exceptional purification properties when used to clean contaminated fluids. Thus, with regard to the use of the final product as a filter media, one embodiment described herein, it is believed that unlike carbon nanotubes which serve as an active component, the primary role that the larger scale fibers, such as the glass fivers, serve as support for the active material(s). While the fiber may remove particulates from the fluid through a size exclusion principle, it typically is a passive, non-reactive element in the nanostructured material used to filter contaminated fluid.

The method disclosed herein may be further exemplified by the attached figures, which are broadly described below.

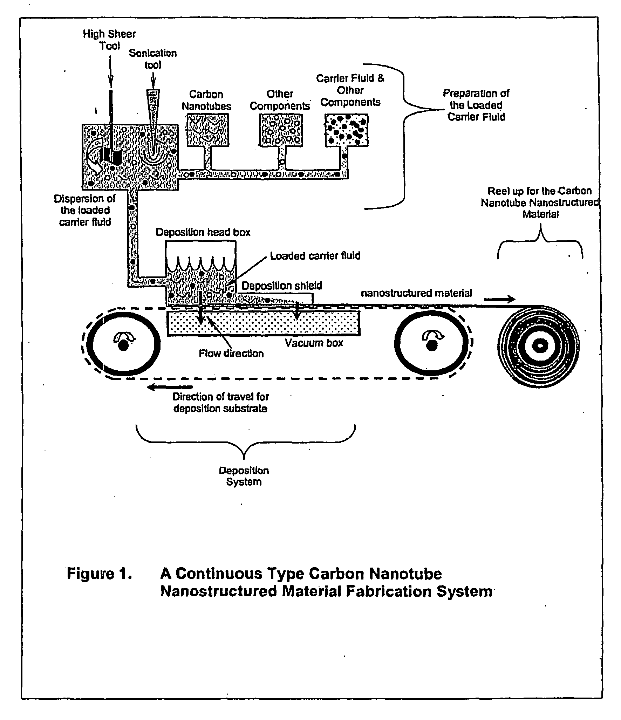

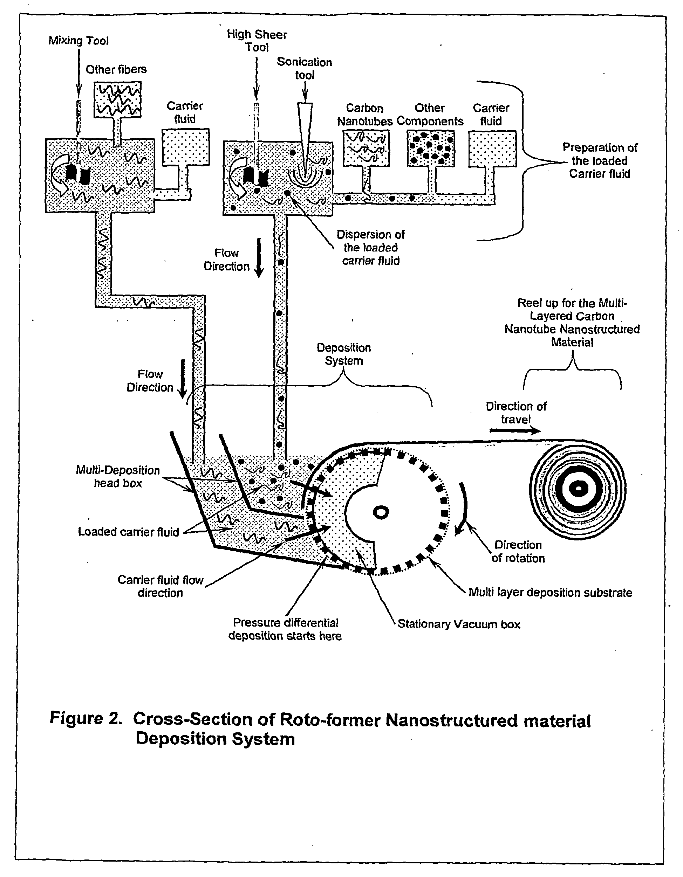

As shown in Figs. 1 and 2, the method described herein may comprise a continuous or semi-continuous method of making a nanostructured material using a modified paper-making type process. In certain embodiments, the method comprises the following steps:
(1) Chemically treating, such as functionalizing, the carbon nanotubes to impart desired chemical, electro-chemical and physical properties to assist in dispersion and/or self-assembly of the nanostructured material. Such a process may also add desirable post-deposition characteristics such as the morphology of the carbon nanotubes,
(2) dispersing nanotubes, with or without additional support fibers, using ultra-sonication and/or mechanical mixing and/or an appropriate high-shear fluid field to form a suspension of carbon nanotube component and, if needed, other components. This suspension is referred to as a "loaded carrier fluid,"
(3) introducing the loaded carrier fluid into the deposition head box where the loaded carrier fluid comes into contact with the selective deposition substrate,
(4) depositing the nanotubes and/or other components from the loaded carrier fluid onto the selective deposition substrate using a differential pressure driven process in an amount sufficient to obtain a substantially-stable, interlocking, monolithic structure,
(5) optionally exfoliating the monolithic structure from the selective deposition substrate,
(6) drying the nano-material through pressing, heating and/or differential pressure filtration to create a strong, semi-continuous, nanostructured material, and
(7) optionally, post-treating the nanostructured material through either spraying an aerosol binder on one or both sides of the material and/or combining with other nano-material or other film layers to create a multi-layered nano-material.

Such a process may be designed as a semi-continuous operation which is interrupted to change substrate roll material.

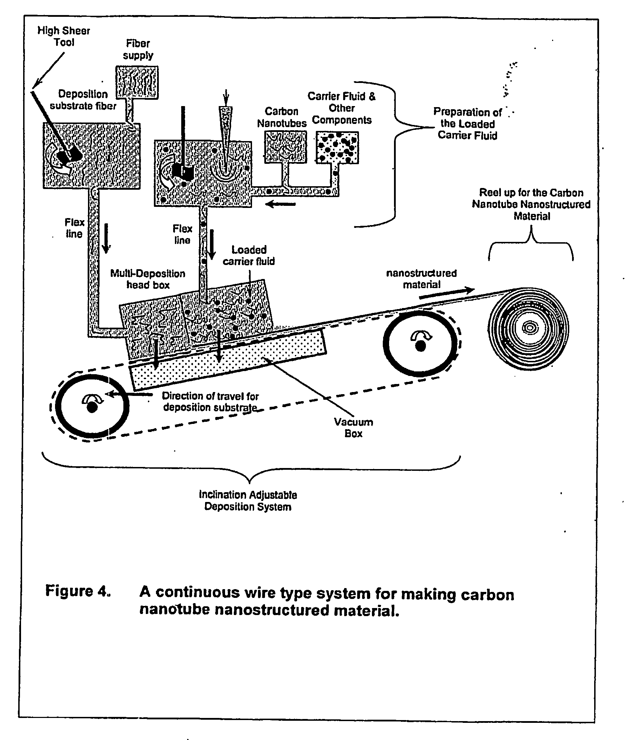

Alternatively, as shown in Fig. 1, in one embodiment of the present invention, there is disclosed a continuous method for making a carbon nanotube nanostructured material. In this process, the depositional substrate is a periodic belt that does not become a part of the nanostructured material, e.g., the method may comprise a reel-to-reel type system, or a Fourdrinier or Inclined Wire former (Fig. 4) fabrication system.

In such a system, the mechanical integrity of the deposition substrate should be sufficient to support the pressure differential by which the system operates, as well as be able to withstand any tension applied to the substrate to move it through the system.

Fig. 1 shows one embodiment in which the loaded carrier fluid (e.g., the carrier fluid containing the carbon nanotubes and optional components described herein) is deposited onto a horizontally moving substrate. The substrate is porous or permeable only to the carrier fluid, but not for the components in the carrier fluid, thus allowing the carbon nanotubes, and optional materials, to deposit on the surface of the substrate. In one embodiment, vacuum may be applied to the low pressure side, e.g., the side where deposition does not occur to assist in deposition. When vacuum is used, it is possible to use a collection mechanism for collecting, and optionally recycling the carrier fluid.

While Fig. 1 shows only one deposition head box unit, it is appreciated that such a continuous system can incorporate multiple deposition head box units, especially when it is desired to form a sequentially deposited multilayer structure.

Because Fig. 1 is similar to a paper making process, it is possible to make the disclosed nanostructured material using the continuous process shown in Fig. 1 with lengths ranging from a few meters to hundreds and even thousands of meters. Because the system is a reel-to-reel type process, the finished product can be easily gathered on a take-up reel, where it can be transported for further processing, such as coating, sizing, stamping, and the like. Alternatively, it is possible to include such post-processing steps prior to the material being gathered on the take-up reel.

As shown in Fig. 2, in another embodiment of the present invention, there is disclosed a continuous method for making using a carbon nanotube nanostructured material based on a roto-former system. In such a system, the mechanical integrity of the deposition substrate should be sufficient to support the pressure differential by which the system operates, as well as be able to withstand any tension applied to the substrate to move it through the system.

While Fig. 2 shows two deposition units for sequential deposition of nanostructured layers, it is appreciated that more deposition units can be employed, especially when it is desired to form a material having sequentially deposited multiple layers.

In addition, it is to be appreciated that post-deposition sub-systems may be used in the systems exemplified in Figs. 1 and 2. Non-limiting examples of such post-deposition sub-systems include, for example, heated rollers to dry the nanostructured material or a coating system between the deposition system and the reel up. In addition, a feed-through mechanism from the stationary vacuum box to a drain or carrier fluid recovery sub-system may also be employed.

The system described in Fig. 4 is similar to that described in Fig. 1, except that it shows the angle of incline can be changed depending upon desired characteristics of the nanostructured material produced.

In any of the methods described herein, a sequence of depositions may be employed, each of which may employ different compositions of nanotubes and/or fiber suspensions, so that the resulting nano-material possesses a gradient in its composition.

In embodiments related to the filter media, the method may employ a filtration substrate comprised of woven, non-woven, spun-bond, perforated, sintered or other heated treated materials, such as wood heated in an environment to form a carbonaceous, porous substrate, or combinations thereof. These materials being chosen to assist self-assembly and/or to provide specific mechanical or physical properties to the resulting nanomaterials. This substrate may be sacrificial or become a part of the final material.

Dispersing of the carbon nanotubes and/or fibers typically comprises ultra-sonication and/or mechanical mixing and dispersion. These mixing and/or dispersing techniques are typically used to produce high-shear flow fields that act to break up agglomerations and/or disperse components within the carrier fluid. An appropriate fluid for dispersing nanotubes may comprise water, organic solvents, acids, or bases. Non-limiting examples of appropriate organic solvents include ethanol, isopropanol, methanol, and xylene.

Calculations have shown that in one embodiment, the nanostructured material comprises approximately 3 x 10⁸ cm of carbon nanotubes per square centimeter of material, which is approximately 3x10⁶ microns of carbon nanotubes per 100 square microns of material. It is possible that the dispersion of carbon nanotubes in the carrier liquid can be formulated such that the finished nanostructured material has approximately 1 x 10¹⁰ microns of carbon nanotubes per 100 square microns of material.

In another embodiment, the nanotube suspension further comprises a support material being dispersed with the carbon nanotubes that may be chosen from the polymers, ceramics, and metals, described herein, and whose morphology may be in a form chosen from fibers, beads, particles, wires, sheets, foils, and any combination thereof.

These support materials may be used to only provide support during the fabrication of the three-dimensional structure and/or may become an integral part of the nanostructured material. Alternatively, some of these materials may be sacrificial, meaning that they are removed by subsequent processing, such as a thermal or chemical process, to eliminate them from the final structure, while leaving a stable structure comprised entirely of carbon nanotube components. The sacrificial support material may be used to assist in the exfoliation of the nanomaterial during production or may be used in applications that do not require the properties of the support material in the final product, such as in certain high strength or armor/ballistic applications, but may need it during production.

In an alternative embodiment, the previously described support material becomes an active material. For example, when carbon nanotubes are used, fibers, such as the previously mentioned glass fibers become the support material. In this alternative embodiment, the fibers, when coated with the previously described metal oxygen components, become the active material for removing contaminants from fluid. The flexibility and adaptability of the methods described herein make the large scale production of nanostructured material possible for a system based on carbon nanotubes, glass fibers, or a combination of carbon nanotubes and glass fibers. As noted, the carbon nanotubes, glass fibers, especially when coated with a metal oxygen component, or both may be the active material.

Non-limiting examples of the methods used to the manufacture the nanostructure materials described herein include a differential pressure filtration process or a nanostructured polymerization process. Each of these processes, including those described in more detail below, can create a nanostructure with nanomaterials embedded on them or composed of them.

In one non-limiting embodiment, the method could comprise the chemical or physical vapor deposition of at least one material chosen from previously described ceramics, metals, and polymers. During this method, deposition comprises the depositing of at least one of the previously described polymers, ceramics, and metals near the intersecting points or anywhere on the outside surface of carbon nanotubes within the nano-structured material.

To enhance its structural support and binding to other entities, the entire nanostructured material can be coated with the previously mentioned metals, plastics, or ceramics. In addition, structural integrity of the nanostructured material can be enhanced by chemical, electrical, electromagnetic, thermal, or mechanical treatment or any combination thereof. In non-limiting embodiments, mechanical treatment could involve rolling the material under pressure, electrical treatment could be performed for a time sufficient to perform electro-migration.

In addition, fusing of the materials within the nanomaterial may be performed by irradiative, electrical, chemical, bio-chemical, thermal, or mechanical processing, either independently or in conjunction with one another. For example, irradiative processing may comprise e-beam irradiation, UV and IR radiation, X-ray, and ionizing radiation. Chemical processing may comprise treating the carbon nanotubes with at least one chemical chosen from acids, bases, carboxyls, peroxides, and amines for a time sufficient to facilitate fusion of the carbon nanotubes with one another. Similarly, chemical processing may comprise photochemical bonding for a time sufficient to obtain chemical cross linking.

In one embodiment, fusing comprises heating the nanostructure in an oven at a temperature below the melting point of the other components acting as support material and/or binder. For example a polymer bi-component fiber fabricated such that only the outer layer of the fiber softens and bonds with other bi-component fibers, carbon nanotube components, and/or other components within the material. This process can be performed in vacuum, or in an atmosphere chosen from inert gases or air.

Any or all of the above-described methods can be further generalized to construct a multi-layered nanomesh material wherein each layer may be of the same or different composition from other layers within the layered material. Further, each layer may be specifically designed to provide some desired behavior to the resulting multi-layer material. In addition, some of these layers may include layers not composed of nano-material and whose presence provides mechanical, electrical, and/or thermal properties or acts to set inter-membrane spacing for the nanomesh layers.

### C. Articles Made By the Disclosed Methods

An article made by the disclosed method may be used for removing contaminants from a fluid, which encompasses both liquids and gases.

Non-limiting examples of liquids that may be cleaned using the article described herein include water, foodstuffs, biological fluids, petroleum and its byproducts, non-petroleum fuels, medicines, organic and inorganic solvents, and the liquid forms of hydrogen, oxygen, nitrogen and carbon dioxide, as may be used for rocket propellants or in industrial applications.

Non-limiting examples of foodstuffs that can be treated with this article comprise animal by-products (such as eggs and milk), fruit juice, alcoholic and nonalcoholic beverages, natural and synthetic syrups, and natural and synthetic oils used in the cooking or food industry [such as olive oil, peanut oil, flower oils (sunflower, safflower), vegetable oil, or oils derived from animal sources (i.e. butter, lard)], or any combination thereof. As one example, sulfites are often added to wine to prevent discoloration and aid in preservation. However, sulfites raise health concerns and should be avoided. One aspect could include the targeted removal of sulfites upon dispensing, benefiting the wine industry from the purification process described herein.

Biological fluids that may be decontaminated with the article described herein could be generally derived from an animal, human, plant, or comprise a culture/growth broth used in the processing of a biotechnology or pharmaceutical product. The biological fluids which may be cleaned comprise blood (or blood components), serums, and milk. Biological reagents used in pharmaceutical products are often quite labile and difficult to sterilize by conventional techniques. Removal of small microorganisms (such as *Mycoplasma* and viruses) cannot be accomplished by conventional filtration. The carbon nanomesh article may be used for viral removal without causing damage to the serum proteins often present and needed in biological reagents. The physical and chemical properties of the nanomesh can be controlled to enable removal of contaminants that are created during drug fabrication.

The article can be used for the sterilization of petroleum products. A significant contamination problem is the latent growth of bacteria in petroleum or its derivatives during storage, which has been a problem particularly with aviation fuel. The presence of such bacteria can severely foul and eventually ruin the fuel. Accordingly, a major area of concern in the area of liquid purification is the cleaning bacteria from natural and/or synthetic petroleum products. Natural and/or synthetic petroleum and its byproducts include aviation, automotive, marine, locomotive, and rocket fuels, industrial and machine oils and lubricants, and heating oils and gases.

Another significant contaminant issue with petroleum products is high sulfur content and excessive levels of certain metals, a notable example being lead. Government regulations prohibit sulfur and lead concentrations in hydrocarbon fuels (used in internal combustion engines) in excess of specific amounts (MCL - maximum contamination level). Accordingly, there is a need for an article to remove specific chemical contaminants from petroleum without adding other unwanted constituents. The article described herein can be used to remove sulfur and/or specific metals from hydrocarbon or other types of fuel, such as gases used in fuel cells.

As many of the foregoing contaminants may be dispersed in air, there is a need for an article for cleaning gases using a material made from the disclosed process. Air may be cleaned to remove any of the previously listed contaminants. Non-limiting examples of gases that may be cleaned using the article described herein include one or more gases chosen from the air or exhausts from vehicles, smoke stacks, chimneys, or cigarettes. When used to clean air, the article may take a flat form to provide a greater surface area for air flow. Such flat shapes provide the additional benefit of being able to be easily cut into appropriate shapes for various filter designs, such as those used in gas masks, as well as HVAC systems. The following gases that may be treated according to the present disclosure, such as scrubbed to clean the gas or remove them from exhaust, include argon, acetylene, nitrogen, nitrous oxide, helium, hydrogen, oxygen, ammonia, carbon monoxide, carbon dioxide, propane, butane, natural gas, ethylene, chlorine, or mixtures of any of the foregoing, such as air, nitrogen oxide, and gases used in diving applications, such as Helium/Oxygen mixtures.

Further, it should be noted that what might be identified as a contaminant in one fluid application may actually be a desired product in another. For example, the contaminant may contain precious metals or a beneficial pharmaceutical product. Therefore, it may be beneficial to separate, retain and collect the contaminants rather than just removing and destroying them. The ability to "catch and release" desired contaminants, enabling the isolation of useful contaminants or certain reaction byproducts, may be accomplished by tuning the zeta potential and/or utilizing nano-electronic control of the nanomesh article, as described in more detail below.

Applications for the articles described herein include home (e.g. domestic water and air filtration), recreational (environmental filtration), industrial (e.g. solvent reclamation, reactant purification), governmental (e.g. the Immune Building Project, military uses, waste remediation), and medical (e.g. operating rooms, clean air and face masks) locations.

While not necessary, the nanomesh described herein can comprise carbon nanotubes attached to each other, or to another material. The attachment and/or connection within the nanomesh is a result of forces acting at the nanoscale, non-limiting examples of which are Van der Waals forces, covalent bonding, ionic bonding, geometric constraints, electrostatic, magnetic, electromagnetic, or Casimir forces or combinations thereof.

The present disclosure also relates to a method of purifying fluid by contacting contaminated fluid with the nanomesh in the article described herein. The method of purifying fluid may comprise contacting the fluid with a nanomesh, wherein the carbon nanotubes are present in the nanomesh in an amount sufficient to reduce the concentration of at least one contaminant in the fluid that comes into contact with the nanomesh or the interaction zone created by the nanomesh. As used herein "reduce the concentrations of at least one contaminant," means a reduction of at least one contaminant to a level below that of the untreated fluid, such as below the maximum contamination levels (MCL) as defined by appropriate regulatory agencies or industrial requirements governing the quality standards of the particular fluid after being treated with the inventive article.

Carbon nanotubes generally have two forms: single wall and multi walls. Single-wall carbon nanotubes comprises one of these tubular structures so that the inter-connected hexagons line-up with each other. Multi-walled carbon nanotubes comprise many concentric shells of these tubular structures. They can have diameters of tens of nanometers, and can theoretically have lengths up to hundreds of meters.

One aspect of the present disclosure is related to the use of carbon nanotubes that have a scrolled tubular or non-tubular nano-structure of carbon rings. These carbon nanotubes are usually single-walled, multi-walled or combinations thereof, and may take a variety of morphologies. For example, the carbon nanotubes used in the present disclosure may have a morphology chosen from horns, spirals, multi-stranded helicies, springs, dendrites, trees, spider nanotube structures, nanotube Y-junctions, and bamboo morphology. Some of the above described shapes are more particularly defined in M.S. Dresselhaus, G. Dresselhaus, and P. Avouris, eds. Carbon Nanotubes: Synthesis, Structure, Properties, and Applications, Topics in Applied Physics. 80. 2000, Springer-Verlag; and "A Chemical Route to Carbon Nanoscrolls, Lisa M. Viculis, Julia J. Mack, and Richard B. Kaner; Science, 28 February 2003; 299, both of which are herein incorporated by reference.

In one aspect, carbon nanotubes whose morphology has been modified with a carbon dimer, alone or in patterns, can be used. For example, carbon dimers that have been inserted into two hexagonal bonds, creating two adjacent pentagons and heptagons in the chain link, can be used.

Carbon nanotubes that comprise patterns of carbon dimers can also be used. Non-limiting examples of such carbon nanotubes include: "bumpy" tubes, which have carbon dimers added symmetrically around the circumference of the tube to create a stable bulge; "zipper" tubes, which have dimers added horizontally along the axial direction in every other hexagon, creating alternating single octagons and pairs of pentagons; and "multiple zipper" tubes, which have six axial "zippers" (described above) spaced by hexagonal rows around a tube.

In one aspect of the disclosed article, a majority of the carbon nanotubes are distorted by crystalline defects such that they exhibit a greater purification performance than non-distorted carbon nanotubes. "Crystalline defects" refers to sites in the tube walls of carbon nanotubes where there is a lattice distortion in at least one carbon ring.

The phrase "exhibit a greater purification performance" means that the nanomesh demonstrates either improvements to the structural integrity of the resultant material, its porosity, its porosity distribution, its electrical conductance, its resistance to fluid flow, geometric constraints, or any combination thereof that lead to an enhancement of contaminant removal. For example, greater purification performance could be due to improved and more efficient adsorption or absorption properties of the individual carbon nanotubes. Further, the more defects there are in the carbon nanotubes, the more sites exist for attaching chemical functional groups. In one embodiment, increasing the number of functional groups present in the nanomesh should improve the performance of the resulting article.

### D. Treatment of Carbon Nanotubes

Unlike the previous discussion on the optional components that may be added to the carrier fluid, the following discussion relates to direct treatment of the carbon nanotubes, which may be performed prior to dispersing the carbon nanotubes in the carrier fluid. It is noted however, that the disclosed method enables the treatment of the carrier fluid and the carbon nanotubes to be performed separately or in conjunction, depending on the desired result. For example, it is understood that the carbon nanotubes may be functionalized as described below, to aid in their dispersion in the carrier fluid, and that the carrier fluid may further comprise components that improve the integrity of the final product.

Thus, the carbon nanotubes may also undergo chemical and/or physical treatments to alter their chemical and/or physical behavior prior to being added to the carrier fluid. These treatments are typically done to enable the resulting article to exhibit desired properties, such as a unique purification performance, in the sense defined above. Non-limiting examples of some unique purification properties are provided in the Examples of this disclosure.

In one embodiment, the carbon nanotubes may be chemically or physically treated to achieve at least one of the following effects: remove contaminants, add defects, or attach functional groups to defect sites and/or nanotube surface.

Herein, "chemical or physical treatment" means treating with an acid, solvent or an oxidizer for a time sufficient to remove unwanted constituents, such as amorphous carbon, oxides or trace amounts of by-products resulting from the carbon nanotube fabrication process.

An example of the second type of chemical treatment is to expose the carbon nanotubes to an oxidizer for a time sufficient to create a desired defect density on the surface of the carbon nanotube.

An example of the third type of the chemical treatment to attach specific functional groups that have a desired zeta potential (as defined in Johnson, P.R., Fundamentals of Fluid Filtration, 2nd Edition, 1998, Tall Oaks Publishing Inc., the definition of which is incorporated herein by reference). This will act to tune the zeta potential or the isoelectric point (pH where the zeta potential is zero) of the carbon nanotubes sufficiently to remove a specific set of desired contaminants from a particular fluid.

In another embodiment, the carbon nanotubes comprise atoms, ions, molecules or clusters attached thereto or located therein in an amount effective to assist in the removal and/or modification of contaminants from the fluid.

The carbon nanotubes described herein may also be treated to alter their properties, as well as the contaminants that may be removed from and/or modified within the fluid. For example, in one embodiment, the carbon nanotubes are chemically treated with an oxidizer, chosen from but not limited to a gas containing oxygen, nitric acid, sulfuric acid, hydrogen peroxide, potassium permanganate, and combinations thereof. Nanotubes which have been treated with an oxidizer can provide unique properties, either in terms of fluid flow, dispersion of nanotubes in the deposition fluid, or from a functionalization perspective (e.g., having the ability to be particularly functionalized).

Functionalization is generally performed by modifying the surface of carbon nanotubes using chemical techniques, including wet chemistry or vapor, gas or plasma chemistry, and microwave assisted chemical techniques, and utilizing surface chemistry to bond materials to the surface of the carbon nanotubes. These methods are used to "activate" the carbon nanotube, which is defined as breaking at least one C-C or C-heteroatom bond, thereby providing a surface for attaching a molecule or cluster thereto. In one embodiment, functionalized carbon nanotubes comprise chemical groups, such as carboxyl groups, attached to the surface, such as the outer sidewalls, of the carbon nanotube. Further, the nanotube functionalization can occur through a multi-step procedure where functional groups are sequentially added to the nanotube to arrive at a specific, desired functionalized nanotube.

The functionalized carbon nanotubes can comprise a non-uniform composition and/or density of functional groups including the type or species of functional groups across the surface of the carbon nanotubes. Similarly, the functionalized carbon nanotubes can comprise a substantially uniform gradient of functional groups across the surface of the carbon nanotubes. For example, there may exist, either down the length of one nanotube or within a collection of nanotubes, many different functional group types (i.e. hydroxyl, carboxyl, amide, amine, poly-amine and/or other chemical functional groups) and/or functionalization densities.

Further, other components of the nanomesh, such as fibers and/or nanoparticles, may also be functionalized with chemical groups, decorations or coatings or combinations thereof to change their zeta potential and/or cross-linking abilities and thereby improve the filtration performance of the nanomesh.

A non-limiting example of performing a multi-step functionalization is one that allows the zeta potential of carbon nanotubes to be controlled and improve their ability to remove viruses. The carbon nanotubes are refluxed in a mixture of acids. While not being bound by any theory, it is believed that such a process increase the number of defects on the surface of the nanotube, increasing carboxyl functional groups attached to the defect locations, and/or changes the zeta potential of the nanotubes due to the negative charge of carboxyl functional groups in water.

Carboxyl functionalized nanotubes may then refluxed in a solution of thionyl chloride in a nitrogen atmosphere. Without being held to any theory, it is believed that this acts to convert the previously attached carboxyl functional groups to acyl chloride functional groups. Subsequently, these acyl chloride functionalized nanotubes are refluxed in as solution of ethylenediamine again in a nitrogen atmosphere. It is believed that this reacts with the amine groups on the end of the diamine with the acyl chloride functional group, thereby converting the acyl chloride functional group to a 2-aminoethylamide functional group by replacement of the chlorine atom with one amine group of the diamine. The termination of the nanotube functionalization with an amine group, will impart a positive charge to the nanotube in water, giving it a positive or less negative zeta potential. The foregoing would enable a nanomesh device constructed with nanotubes of this type to specifically target negatively charged contaminants (such as anions, certain molecules, and virus particles) for capture by Van der Waals and/or electrostatic forces, leading to their removal from the contaminant stream.

In another embodiment, carbon nanotubes can also be used for high surface area molecular scaffolding either for functional groups comprised of organic and/or inorganic receptors or to provide structure and support for natural or bioengineered cells [including bacteria, nanobacteria and extremophilic bacteria]. Examples of nanobacteria, including images of nanobacteria in carbonate sediments and rocks can be found in the following references, which are herein incorporated by reference. R.L. Folk, J. Sediment. Petrol. 63:990-999 (1993), R.H. Sillitoe, R.L. Folk and N. Saric, Science 272:1153-1155 (1996). The organic and/or inorganic receptors will selectively target the removal of specific contaminants from a fluid stream. The natural or bioengineered cells supported by the nanotubes will consume, metabolize, neutralize, and/or bio-mineralize specific biologically-active contaminants. For example, there are specific microorganisms adhered to the nanotubes that can reduce the toxicity of oil spills.

The carbon nanotubes, the carbon nanotube material, or any subassembly thereof may be treated with radiation. The radiation may be chosen from but not limited to exposure from electromagnetic radiation and/or at least one particle chosen from electrons, radionuclides, ions, particles, clusters, molecules or any combination thereof. As previously described, the radiation should impinge upon the carbon nanotube in an amount sufficient to 1) break at least one carbon-carbon or carbon-heteroatom bond; 2) perform cross-linking between nanotube-nanotube, nanotube to other nanomesh constituent, or nanotube to substrate; 3) perform particle implantation, 4) improve the chemical treatment of the carbon nanotubes, or any combination thereof. Irradiation can lead to a differential dosage of the nanotubes (for example due to differential penetration of the radiation) which causes non-uniform defect structure within the nanomesh structure. This may be used to provide a variation of properties, via a variation of functional groups attached to the carbon nanotubes.

The carbon nanotubes described herein may also be filled or impregnated with a desired material to achieve certain beneficial properties. The terms "filled" or "impregnated" can be used interchangeably, and refer to carbon nanotubes that are at. least partially filled with a substance of interest. The substance filled or impregnated into the carbon nanotube can typically improve the nanomesh filtration performance and/or specifically re-target its application. A non-limiting example is the improvement of filtration through increased nanotube affinity for specific contaminants. For example, if an article is to be used to remove an electronegative contaminant, such as arsenic complexes in water, the carbon nanotubes are first impregnated with an electropositive substance.

In addition, carbon nanotubes, according to the present disclosure, may be modified by coating or decorating with a material and/or one or many particles to assist in the removal of contaminants from fluids or increase other performance characteristics such as mechanical strength, bulk conductivity, or nano-mechanical characteristics. Unlike functionalized carbon nanotubes, coated or decorated carbon nanotubes are covered with a layer of material and/or one or many particles which, unlike a functional group, is not necessarily chemically bonded to the nanotube, and which covers a surface area of the nanotube sufficient to improve the filtration performance of the nanomesh.

Carbon nanotubes used in the article described herein may also be doped with constituents to assist in the removal of contaminants from fluids. As used herein, a "doped" carbon nanotube refers to the presence of ions or atoms, other than carbon, into the crystal structure of the rolled sheets of hexagonal carbon. Doped carbon nanotubes means at least one carbon in the hexagonal ring is replaced with a non-carbon atom.

In another embodiment, carbon nanotubes as described herein could be decorated by a cluster or clusters of atoms or molecules. As used herein "decorated" refers to a partially coated carbon nanotube. A "luster" means at least two atoms or molecules attached by any chemical or physical bonding.

The clusters can exhibit properties of quantum dots resulting in photo-stable, color-tunable, nanocrystal with a wide absorption spectrum and a narrow emission peak. Clusters, including quantum dots, may be comprised of metals, nonmetals and combinations thereof. These attached clusters may be subsequently photo-activated to remove, disable and/or destroy contaminants. A quantum dot is a particle of matter so small that the addition or removal of an electron can be detected, and changes its properties in some useful way. In one embodiment, a quantum dot is a semiconductor crystal with a diameter of a few nanometers, also called a nanocrystal, that because of its small size behaves like a potential well that confines electrons in three dimensions to a region of a few nanometers.

The molecules or clusters may include inorganic compounds containing at least one metal atom chosen from: lithium, sodium, magnesium, aluminum, potassium, calcium, scandium, titanium, vanadium, chromium, manganese, iron, cobalt, nickel, copper, zinc, gallium, rubidium, strontium, yttrium, zirconium, niobium, molybdenum, rhodium, palladium, silver, indium, tin, cesium, barium, lanthanum, cerium, praseodymium, neodymium, promethium, samarium, europium, gadolinium, terbium, dysprosium, holmium, erbium, thulium, ytterbium, lutetium, hafnium, tantalum, tungsten, rhenium, osmium, iridium, platinum, gold, bismuth and at least one nonmetal atom chosen from: hydrogen, boron, carbon, nitrogen, oxygen, fluorine, silicon, phosphorus, sulfur, chlorine, bromine, antimony, iodine and combinations thereof.

The molecules or clusters may also include organic compounds containing at least one protein, including natural polymers composed of amino acids joined by peptide bonds, carbohydrates, polymers, aromatic or aliphatic alcohols, and nucleic or non-nucleic acids, such as RNA and DNA.

Non-limiting examples of the organic compound may comprise at least one chemical group chosen from carboxyls, amines, arenes, nitriles, amides, alkanes, alkenes, alkynes, alcohols, ethers, esters, aldehydes, ketones, polyamides, polyamphiphiles, diazonium salts, metal salts, pyrenyls, thiols, thioethers, sulfhydryls, silanes, and combinations thereof.

The foregoing list of polymeric, ceramic, metallic, and biological materials encompasses the same materials that may fill, functionalize, or coat the carbon nanotubes. It has been discovered that such materials can be attached to or placed within the carbon nanotubes more easily if the surface of the carbon nanotubes is purposely defected.

### E. Fibers Included in the Nanomesh

The nanomesh described herein may also comprise fibers which act to maintain the dispersion (or exfoliation) of the carbon nanotubes during processing, and/or which may add mechanical integrity to the deposition substrate or the final product. Such fibers can be sacrificial (removed from the structure during further processing, such as by chemical or heat treatments) or can remain an integral part of the finished device. As used herein, the term "fiber" means an object of length L and diameter D such that L is greater than D, wherein D is the diameter of the circle in which the cross section of the fiber is inscribed. For example, the aspect ratio L/D (or shape factor) is chosen ranging, for example, from 2 to 10⁹, such as from 5 to 10⁷ and further such as from 5 to 10⁶. Typically these fibers have a diameter ranging from 1 nm to 1 mm, such as from 10nm to 100 µm.

The fibers that may be used in the composition disclosed herein may be mineral or organic fibers of synthetic or natural origin. They may be short or long, individual or organized, for example, braided, and hollow or solid. They may have any shape, and may, for example, have a circular or polygonal (square, hexagonal or octagonal) cross section, depending on the intended specific application.

The fibers have a length ranging, for example, from 10nm to 10m, such as from 20 nm to 1 cm. Their cross section may be within a circle of diameter ranging, for example, from 1 nm to 1 mm.

The fibers can be those used in the manufacture of textiles as derived from bio-mineralization or bio-polymerization, such as silk fiber, cotton fiber, wool fiber, flax fiber, feather fibers, cellulose fiber extracted, for example, from wood, legumes or algae.

Medical fibers may also be used in the present disclosure. For instance, the resorbable synthetic fibers may include: those prepared from glycolic acid and caprolactone; resorbable synthetic fibers of the type which is a copolymer of lactic acid and of glycolic acid; and polyterephthalic ester fibers. Nonresorbable fibers such as stainless steel threads may be used.

The fibers may be chosen from:

(a) at least one polymeric material chosen from single or multicomponent polymers such as nylon, acrylic, methacrylic, epoxy, silicone rubbers, synthetic rubbers, polypropylene, polyethylene, polyurethane, polystyrene, polycarbonates, aramids (i.e. Kevlar^{®} and Nomex^{®}), polychloroprene, polybutylene terephthalate, poly-paraphylene terephtalamide, poly (p-phenylene terephtalamide), and polyester ester ketone, polyesters [e.g. poly(ethylene terephthalate), such as Dacron^{®}], polytetrafluoroethylene (i.e. Teflon^{®}), polyvinylchloride, polyvinyl acetate, viton fluoroelastomer, polymethyl methacrylate (i.e. Plexiglass^{®}), and polyacrylonitrile (i.e. Orlon^{®}), and combinations thereof;

(b) at least one ceramic material chosen from boron carbide, boron nitride, spinel, garnet, lanthanum fluoride, calcium fluoride, silicon carbide, carbon and its allotropes, silicon oxide, glass, quartz, silicon nitride, alumina, aluminum nitride, aluminum hydroxide, hafnium boride, thorium oxide, cordierite, mullite, ferrite, sapphire, steatite, titanium carbide, titanium nitride, titanium boride, zirconium carbide, zirconium boride, zirconium nitride, and combinations thereof;

(c) at least one metallic material chosen from aluminum, boron, copper, cobalt, gold, platinum, palladium, silicon, steel, titanium, rhodium, iridium, indium, iron, gallium, germanium, tin, tungsten, niobium, magnesium, manganese, molybdenum, nickel, silver, zirconium, yttrium, their oxides, hydrides, hydroxides and alloys thereof;

(d) at least one biological material or derivative thereof chosen from cotton, cellulose, wool, silk, and feathers, and combinations thereof; and

(e) at least one carbon nanotube chosen from single walled, double walled or multi-walled carbon nanotubes that have either a nested or non-nested morphology of nano-horns, nano-spirals, nano-springs, dendrites, trees, spider nanotube structures, nanotube Y-junctions, and bamboo morphology or multi-stranded helices;

(f) at least one metallic oxide or metallic hydroxide nanowire. For example, a metal oxide nanowire can be prepared by heating metal wires with oxygen in a reaction vessel to a temperature ranging from 230-1000°C for a period ranging from 30 minutes to 2 hours. The nanowires will grow by using macroscale wires made any metal previously mentioned as a feedstock. The resulting metallic oxide nanowires can be in a size ranging from 1-100 nanometers in diameter, such as 1-50 nanometers in diameter, including 2-5 nanometers in diameter. In one advantageous aspect of this process, the surface of the base wire is abraded to provide a roughened surface texture to enable better nanotube adhesion within the nanomesh as well as enhance the purification performance of the article. These metal oxide or metal hydroxide nanowires can also be obtained from commercial suppliers.

### F. Substrates Used in the Device

One embodiment includes a support substrate for depositing the carbon nanotubes using a differential pressure process, wherein the substrate is porous or permeable to the carrier fluid used to deposit the carbon nanotubes. The porous support substrate may be in any form suitable for the shape of the resulting article, such as a block, tube (or cylinder), sheet or roll, and may comprise a material chosen from ceramic, carbon, metal, metal alloys, or plastic or combinations thereof. In one embodiment, the substrate comprises a woven or non-woven fibrous material.

Further, when the substrate takes the form of sheet, the substrate may be either a flat or planar sheet or in a pleated form. The pleated form being chosen to increase the surface area of the nanomesh exposed to contaminated fluid, when used to purify contaminated fluids.

In one embodiment, the substrate is a roll of material on which the nanomesh is deposited. In this process, the roll may be scrolled through a series of deposition and other processing stations in either a continuous or semi-continuous manner, as described above.

In another embodiment, wherein the nanomesh is created by a rolled process, it may be used to wrap around a hollow, porous cylinder, block or other supporting structure to form the filter media.

In another embodiment, the porous tubular substrate comprises a carbon material, such as activated carbon (bulk or fiber), the outer surface of which is coated with the carbon nanotubes described herein.

In another embodiment, a collection of metal oxide/hydroxide nanowires, made as described above, may also be used as a substrate for the deposition(s) of carbon nanotubes using a differential pressure deposition process. The resulting nano-wire/carbon nanotube nanomesh may or may not be treated thermally, mechanically, or chemically to enhance structural integrity and/or improve the purification performance of the article. The chemical treatments may include the functionalizing, coating or decoration of the resultant nanomesh with chemical groups, metals, ceramics, plastics, or polymers. Further these chemical treatments may be done so that they the nanomesh article chemically or physically reacts or interacts with contaminants to destroy, modify, immobilize, remove, or separate them..

In other embodiments, the porous support substrate used during the differential pressure deposition process may be either sacrificial or used only temporarily during deposition to form the nanomesh in a method analogous to paper manufacturing.

### G. Other Manifestations of the Device

Another embodiment of the article comprises multiple nanomesh layers, each of which may be specifically, and independently, tuned through its zeta potential or other means to remove a specific distribution of contaminants or to improve other performance characteristics of the article. The phrase, "other means" is intended to mean the tuning of specific properties of the nanomesh layer such as its porosity, the contaminant affinity [e.g. functionalization of nanomesh components, specific contaminant(s) receptors], or strength (e.g. binding or cross-linking agents used).

In another embodiment, the nanomesh contains a binding agent (such as polyvinyl alcohol) that acts to improve the filtration performance of the article. Such a binding agent may be introduced into the suspension containing the carbon nanotubes and other nanomesh components prior to the formation of the nanomesh structure.

In another embodiment, the nanomesh can be formed through a process of self assembly. "Self assembly" means that the nanomesh components arrange themselves into the final nanomesh structure. This is accomplished by controlling the electric, magnetic, chemical and geometric constraints through the choice of functional groups, surface charge distributions, the composition or properties of the dispersive agent, or any combination thereof. For example, adjusting the surface charge distribution of the nanomesh components controls their electrical behavior, which in turn determines how they arrange into the structure of the assembled nanomesh. This self assembly may be in any form that leads to an enhanced structural framework within the nanomesh that improves the removal properties, porosity, electrical resistance, resistance to fluid flow, strength characteristics or combinations thereof.

Further, the above self assembly may be "directed" through the imposition of an external field. This applied field works in concert with the properties of any or all of the nanomesh components and/or the fluid in which the components are suspended to guide their assembly into the resulting nanomesh. For example, a suspension containing some or all of the components of the nanomesh may be subjected to electromagnetic stimulation during the formation of the nanomesh to achieve a desired component alignment and/or weaving to enhance the fluid purification performance.

### H. Mechanisms of Action

### 1. Fluid Sterilization

Without wishing to be bound by any theory, it is believed the nanomesh described herein forms a unique nanoscopic interaction zone that uses chemical and physical forces to first attract then to modify or separate microbes and other pathogens from the fluid stream. For example, it is believed that during the sterilization of a fluid, microorganisms come into contact with the nanomesh, causing focused forces to be applied to the microorganisms. These forces first attract, then either cause adherence and/or modification of cells. It is possible that this modification involves disrupting the cell membranes or causing internal cellular damage, thus disabling and/or destroying the microorganisms or their ability to reproduce. In this way, fluids can be effectively sterilized with respect to microorganisms. Common microorganisms are in the size range of 1-5 microns long and as such are at least 100 times larger than a nanostructure such as carbon nanotubes. Known examples of these organisms include *E*. *coli, Vibrio cholera, Salmonella typhi, Shigella dysenteriae, Cryptosporidium parvum, Giardia lamblia, Entamoeba histolytica,* and many others. Examples of viruses transmitted through water include *Polio, Hepatitis A, Rotavirus, Enteroviruses* and many others. Examples of chemical agents include, but are not limited to, ions, heavy metals, pesticides, herbicides, organic and inorganic toxins, and microbial toxins (such as that causing botulism).

Due to the large size differences, forces on the nanoscopic scale can be applied that are orders of magnitude more intense than those based on micro- or macroscopic technologies. By analogy to the way that focused light gives the intensity to a laser, focused forces give the intensity to nanoscale attraction and/or destruction of microbes. Thus, mechanical and electrical forces that are on larger scales either too small to be effective or very energy-intensive, on the nanoscale can be used to effectively and efficiently remove or destroy microorganisms.

Mechanisms believed to be capable of adsorbing then destroying microorganisms in this nano-regime can act independently or in concert with one another. Non-limiting examples of such mechanisms include:

• Mechanical penetration and/or abrasion of the cell wall through focused forces;

• Vibrational waves causing either external damage to the cell wall and transport channels and/or internal cellular damage to the DNA, RNA, proteins, organelles, and the like;

• Bubble cavitations from shockwaves in the liquid around the carbon nanotubes which damage the cell structure;

• Electromagnetic, electrostatic and/or Van der Waals forces which capture and hold biological contaminants;

• Disruption of hydrogen bonding in the vicinity of nanostructures via zeta action causing damage to cell walls and/or DNA;

• Acidification of the environment around the nanostructure, due to specific nanotube functionalizations that attract naturally occurring H⁺ ions in water, which damages cell walls and/or DNA.

Since the osmotic pressure within a typical microbial cell is higher than that of the surrounding fluid, assuming non-physiological conditions, even slight damage to the cell wall can cause total rupture as the contents of the cell flow from high to low pressure. Further, sufficient damage to the DNA of a viral or microbial cell can destroy at least one microorganism's ability to reproduce or infect host cells rendering it incapable of causing infection.

### 2. Nano-electronic Fluid Purification

According to the present disclosure, another process of fluid purification is also based on the nanomesh article. In this case, an electrostatic or electromagnetic field is imposed upon a nanomesh to control the purification of a fluid. Much like the behavior of electro-static separation devices, the imposition of an electric potential across the nanomesh can remove contaminants on the nanoscale. Further, this process can be used in reverse to cleanse the filter article.

In addition, the entire nanomesh can be stimulated with dynamic electromagnetic fields which, when properly adjusted, will excite nanomesh-wide vibrations. These vibrations could have both microorganism damaging effects or induce an ultrasonic self-cleaning effect. The utility of the inventive article, in this connection, is that advantage is taken of the high strength, high stiffness (large Young's modulus), high conductivity, and the piezo-electric property of the nanotubes.

Additionally, for some applications, the imposition of a more generalized electromagnetic field can give fluid purification performance that goes beyond existing technologies. For example, in the case of two conducting nanomesh layers, imposing an electric current generates a magnetic field between nanomesh layers. This field could be tuned to capture all charged particles from a fluid stream.

### 3. Liquid Desalination

According to the present disclosure, a process of liquid desalination is also based on the described nanomesh article. One mechanism believed to be capable of desalinating liquid with the described nanomesh, is the imposition of a voltage differential between two or more nanomesh membranes. In this case, one nanomesh membrane carries a positive charge and the other membrane a negative charge. The applied potential causes cations to migrate toward the negatively charged membrane and anions to migrate toward the positively charged one. Due to the large surface area (1000m²/gram) of carbon nanotubes, the application a voltage differential across the nanomesh membrane creates a very high capacitance device, thereby creating a efficient, compact, reversible ionic separation zone (i.e. an ion trap).

A desalination unit could incorporate two or more parallel layers of supported conductive nanomesh that are electrically isolated from each other. The two or more layers may be electrically charged in either a static or active mode. In static mode, for example, the nanomesh layers could be oppositely charged to create a salt trap between them. In an active mode device with four or more layers, for example, a four phase signal would be applied to the multi-layer nanomesh structures such that the four legs of the signal are applied to four sequential nanomesh layers. This pattern is repeated every fourth nanomesh layer. In this way, the charge on each nanomesh layer and across the device indexes sequentially in time from positive to neutral to negative to neutral. Done sequentially in time would create, electronically, a moving *virtual* capacitor within the device which can cause the salt ions to migrate in a direction different than the flow of the water through the device. The concentrated salt water would accumulate at the terminus of the virtual capacitor and could be channeled out of a brine port on the device, while the fresh water would pass through the device.

In practice, due to the polarized nature of the water molecule, ions in a water solution have their charges shielded by a cloud of water molecules that surround them, which is described as the DeBye atmosphere. Because this cloud of water molecules is carried along with the ions as they move, it acts to increase the ions effective mass and ionic radius. Therefore, a higher frequency (relative to the frequency required to induce ion separation) AC signal can be imposed across the membrane layers in the desalination device. The purpose of this higher frequency signal is to disrupt the DeBye atmosphere shielding the ions in solution. As a result of shedding this water molecule shell, the ions appear smaller and less massive and can move with less resistance through the fluid. This aspect of the invention improves the efficiency of the desalination device.

Additionally, the desalination device described herein could be designed to take advantage of the biological removal characteristics of the nanomesh structure, as discussed above, to purify the resulting fresh water.

### 4. Prevention of Bio-films

According to one aspect of the present disclosure, surfaces susceptible to bio-film formation, due to the attachment and growth of contaminating microbes, can be coated with a layer of nanomaterial to prevent either the attachment or subsequent growth of undesirable elements, such as molds, bacteria. Non-limiting examples of such nanomaterials include elements or compounds having antibacterial properties (such as iodine resin, silver, aluminum oxide, aluminum hydroxide, or triclosan) that are attached to the surface or located within the carbon nanotube or attached to any other nanomesh component.

### I. Types of Contaminants Removable by the Invention

Non-limiting examples of contaminants that can be removed from fluid using the disclosed article include, but are not limited to, the following biological agents: pathogenic microorganisms [such as viruses (e.g. smallpox and hepatitis), bacteria (e.g. anthrax, typhus, cholera), oocysts, spores (both natural and weaponized), molds, fungi, coliforms, and intestinal parasites], biological molecules (e.g. DNA, RNA), and other pathogens [such as prions and nanobacteria (both natural and synthetic)].

"Prions" are defined as small infectious, proteinaceous particles which resist inactivation by procedures that modify nucleic acids and most other proteins. Both humans and animals are susceptible to prion diseases [such as Bovine Spongiform Encephalopathy (BSE or Mad Cow disease) in cows, or Creutzfeld-Jacob Disease (CJD) in humans].

"Nanobacteria" are nanoscale bacteria, some of which have recently been postulated to cause biomineralization in both humans and animals. It has further been postulated that nanobacteria may play a role in the formation of kidney stones, some forms of heart disease and Alzheimer's Disease. Further, nanobacteria are also suspected of causing unwanted biomineralization and/or chemical reactions in some industrial processes.

Other non-limiting examples of contaminants that can be removed from fluid using the disclosed article include, but are not limited to noxious, hazardous or carcinogenic chemicals comprised of natural and synthetic organic molecules (such as toxins, endotoxins, proteins, enzymes, pesticides, and herbicides), inorganic contaminants (such as heavy metals, fertilizers, inorganic poisons) and ions (such as salt in seawater or charged airborne particles).

Applications of the cleaned fluid, specifically clean water, include potable water, irrigation, medical and industrial. For example, as a source of deionized water for industrial processes including, but not limited to, semiconductor manufacturing, metal plating, and general chemical industry and laboratory uses.

More specifically, the chemical compounds that may be removed from fluid using the article described herein are removal target atoms or molecules that include at least one atom or ion chosen from the following elements: antimony, arsenic, aluminum, selenium, hydrogen, lithium, boron, carbon, oxygen, calcium, magnesium, sulfur, chlorine, niobium, scandium, titanium, vanadium, chromium, manganese, iron, cobalt, nickel, copper, zinc, gallium, germanium, bromine, strontium, zirconium, yttrium, molybdenum, rhodium, palladium, iodine, silver, cadmium, indium, cesium, tin, barium, lanthanum, tantalum, beryllium, copper, fluoride, mercury, tungsten, iridium, hafnium, rhenium, osmium, platinum, gold, mercury, thallium, lead, bismuth, polonium, radon, radium, thorium, uranium, plutonium, radon and combinations thereof.

### J. Generalized Construction of the Invention

Another aspect of the present disclosure relates to a method of making a nanomesh material to be used in an article for removing contaminants from fluid, such as a nanomesh material comprises functionalized carbon nanotubes.

### 1. Preparation of Functionalized Carbon Nanotubes

One process for preparing functionalized carbon nanotubes generally comprises an initial sonication of commercially available carbon nanotubes in a solvent. Such carbon nanotubes include multi-wall carbon nanotube powder made by any chemical process, such as Chemical Vapor Deposition (CVD) oven process that typically has a purity >95% by weight, and characteristic dimensions of 500nm-50µm in length, such as 10-20 µm, and 2-200 nm in diameter.

Therefore, subsequent to, or simultaneous with, sonication the carbon nanotubes are treated in acid, chosen from but not limited to nitric, sulfuric, hydrochloric, and/or hydrofluoric acid or combination thereof. These acids can be used individually to wash the carbon nanotubes, or be used in various combinations. For example, in one embodiment, the carbon nanotubes are first washed in nitric acid and then washed in hydrofluoric acid. In another embodiment, the carbon nanotubes are washed in sulfuric acid after being washed in nitric acid.

The acid wash is performed to remove any contaminants, such as amorphous carbon, or catalyst particles and their supports which may interfere with the surface chemistry of the nanotube, and producing functional groups (such as carboxyl, for example) attached to the defect locations on the surface of the carbon nanotubes.

This functionalization also provides hydrophilicity to the carbon nanotubes, which is thought to improve the filtration performance of the resulting article. The carbon nanotubes are then subjected to a final distilled water rinse, and suspension in an appropriate dispersant, such as distilled water, or an alcohol, such as ethanol or isopropanol. In one embodiment, sonication, stirring and heating is employed throughout this functionalization process to maintain adequate dispersion of the nanotubes while cleaning.

### 2. Preparation of Metal Oxide Treated Fibers

In one embodiment, the process of making a nanomesh for use in the described article comprises mixing the previously described functionalized carbon nanotubes with metal oxide (such as iron oxide) or metal hydroxide (such as iron hydroxide) treated (either coated or decorated) fibers as disclosed herein. The preparation of such metal oxide or metal hydroxide treated glass fibers may comprise mixing a metal oxide or metal hydroxide containing solution with commercially available glass fibers, such as fibers having a diameter ranging from 0.2 µm-5 µm.

In one embodiment, the process comprises stirring the glass fibers with a mixture of distilled water and colloidal metal oxide or metal hydroxide solution for a time sufficient to treat the glass fibers. The treated fibers may then be dried in an oven.

### 3. Preparation of Suspensions

The ingredients used to make the suspension comprise the functionalized carbon nanotube solution and the metal oxide or metal hydroxide treated fibers prepared in the previously mentioned processes. To prepare the component parts of the suspension, the functionalized carbon nanotubes are first dispersed in an appropriate medium, such as water or ethanol, by sonication. The metal oxide or hydroxide treated glass fibers are separately dispersed in a container, again in an appropriate medium, such as water or ethanol. These separate dispersions are then mixed to form a suspension of functionalized carbon nanotubes and metal oxide or metal hydroxide treated fibers.

In one embodiment, the structure of the final nanomesh may comprise different layers of functionalized carbon nanotubes and metal oxide or metal hydroxide treated glass fibers. These different layers are formed from distinct suspension made from different ratios of carbon nanotubes and treated glass fiber.

### 4. Deposition of Carbon Nanomesh

The procedure for depositing the functionalized carbon nanotube/treated fiber mixture including, but not limited to, metal oxide or metal hydroxide coating of any of the fibers disclosed here in. For example, the nanomesh can be made from the carbon nanotube/treated fiber mixture using a differential pressure deposition or direct assembly. In this embodiment, the deposition process uses differential pressure across the substrate to deposit the functionalized carbon nanotube/metal treated fiber suspension onto a carbon block substrate. In this embodiment, the pressure difference applied across the substrate is such that the pressure is lower inside the substrate block. This differential pressure forces the fluid comprising the suspension to flow through the substrate, depositing carbon nanotube/glass fiber mixture on the outer surface of the substrate, thereby forming the nanomesh.

### 5. Article Assembly

After the nanomesh material is dried, the coated substrate is covered with a porous protective paper and a coarse plastic netting to protect the nanomesh material. End caps are then attached and the edges of the nanomesh sealed to prevent fluid circumventing the nanomesh. This assembly is then incorporated into an outer housing which is sealed to form the article for removing contaminants from a fluid.

### K. Methods for Determining Effectiveness

Using established microbiological techniques, described herein, it has been demonstrated the carbon nanomesh filters are capable of removing more than 7 logs of a bacterial contaminant (*E. coli*) and more than 4 logs of a surrogate for viral agents (the MS 2 bacteriophage). These removal capacities exceed the requirements for bacterial removal and the recommended levels of viral removal specified by the US-EPA (Guidance Manual for Compliance with the Filtration and Disinfection Requirements for Public Water Systems. Using Surface Water, U.S. Environmental Protection Agency, March 1991). Independent testing of the inventive article, it has confirmed that the article satisfies the basic standards for water purification in the United States.

Multiple tests were performed on samples made using the methods generally described above using bacteria, such as *E.coli,* and viruses, such as *MS* 2 bacteriophage. The *MS* 2 bacteriophage, which is commonly used as a surrogate in assessing a devices virus removal capabilities for drinking water, is a male specific, single stranded RNA virus, with a diameter of 0.025 µm and an icosahedral shape. Its size and shape are similar to other waterborne viruses such as the polio and hepatitis viruses, although the MS 2 bacteriophage is not a human pathogen.

The protocol used for testing the removal of the *E*. *coli* bacteria and the MS 2 bacteriophage from water in the all of the following examples were consistent with and generally adhered to: (i) Standard Operating Procedure for MS 2 bacteriophage Propagation/Enumeration. Margolin, Aaron, 2001, University of New Hampshire, Durham, NH and (ii) Standard Methods for the Examination of Water and Wastewater, 20th Edition, Standard Methods, 1998, APHA, AWWA, WEF, Washington, DC, which are herein incorporated by reference.

Using these methods described above, and as exemplified in the following examples, strong adherence forces between bacteria and carbon nanotubes was observed. For example, the bacteria adhered to the carbon nanotubes surface, especially when dispersed during sonication. It is believed that the same adherence of *E*. *coli* suspension occurs when it is passed through the disclosed nanomesh of carbon nanotubes.

In addition, evidence that the integrity of the bacterial cell, may be partially compromised upon interaction with the carbon nanomesh was observed. For example, electron microscopy of the bacteria in the presence of carbon nanotubes described herein revealed images showing some apparent penetration of the bacterial shell/cell wall. After a prolonged period (24 hours) some disruption apparently resulted from a breech in the integrity of the cell wall, which, due to the difference in the osmotic pressure between the interior and exterior of the cell, led to a catastrophic failure of the cell wall and the disintegration of the bacteria. However, this disruption of cell integrity was apparent immediately upon contact with the carbon nanotubes, as observed by light microscopy in a phase microscope.

Further, tests confirmed the destruction of some bacteria, as evidenced by the presence of at least a small amount of free bacterial DNA and protein in the filtrate. However, most of the bacterial cells remain intact immediately after contact with the nanotubes. Although the inventive nanomesh article has been demonstrated to effectively remove bacteria from the effluent stream, the ability of the nanotubes to kill bacterial cells has not yet been established, although it is a likely possibility.

Further, through other testing of the inventive article other contaminants, such as those previously described (including metals, salts, organic contaminants, endotoxins) can be removed from water and air.

The invention will be further clarified by the following non-limiting examples, which are intended to be purely exemplary of the invention.

### EXAMPLE 1: E. coli Interaction with Carbon Nanotubes

The interaction of an *E*. *coli* bacterial culture with a suspension of carbon nanotubes was investigated to determine the effectiveness of carbon nanotubes to attach to and subsequently disable or destroy bacterial cells. Further, this study will provide insight into the mechanisms active in the inventive nano-purification article. The procedure compared an untreated sample containing bacterial cultures to a sample mixed with carbon nanotubes. The comparisons will be done under high magnification using both light and atomic force microscopy techniques.

### Preparation of E. Coli Suspension

An *E*. *coli* suspension was made by using a sterile, biological loop (commercially available) to remove a loop full of the reconstituted stock [obtained from American Type Culture Collection (ATCC), stock culture ATCC #25922] which was streaked on a commercially available blood agar plate. This plate was then incubated for 12-18 hours at 36° C, removed from the incubator and examined for purity.

Using a sterile biological loop (commercially available) one loop full of the incubated culture was removed and placed in 10 ml of sterile commercially available Tryptic soy broth (Remel cat. No. 07228). The *E*. *coli* was then grown in the resulting trypticase-soy broth for 18 hours at 37°C, followed by centrifugation and suspension, to form a concentrated bacterial culture of approximately 5x10⁹ colony forming units(cfu)/ml in pure water.

### Functionalization of Carbon Nanotubes with Nitric Acid

The carbon nanotubes were treated with nitric acid solution to remove contaminants (such as amorphous carbon, or catalyst particles and their supports which may interfere with the surface chemistry of the nanotube), increase the number of crystalline defect sites in the nanotubes and to attach carboxyl chemical group to these defect sites. This functionalization also provided a hydrophilic behavior to the carbon nanotubes.

The treatment was performed by mixing 250mg of purified nanotubes in a total volume of 35ml of concentrated nitric acid in a centrifuge tube, shaking well and sonicating in a Cole Parmer 8851 Sonicator at full power for 10 minutes in 50°C water bath. The nitric acid/carbon nanotube mixture was then centrifuged at 2,500 rpm until the supernatant was clear (6-10 minutes) and then the supernatant was decanted. The nitric acid treatment was repeated, but with 20 minutes of sonication. The nitric acid treated carbon nanotubes were then water washed by suspending them in 35ml total volume distilled water, sonicating (as above) for 10 min, centrifuging (as above), then decanting the supernatant. This water wash was repeated until the pH was at least 5.5 (~3-4 times), sonicating for 5 min each time.

### Preparation of Test Solutions

The *E*. *coli* suspension, prepared as outlined above, was then divided into two equal parts. The untreated solution (Test Solution #1) was prepared by diluting one of the divided *E. coli* suspensions with distilled water to attain an *E*. coli concentration of 2~x10⁹ cfu/ml (2:5 dilution). The other solution (Test Solution #2) was prepared by adding 25 mg of functionalized nanotubes to the other divided *E. coli* suspension. This solution was then diluted with distilled water to achieve the same concentration of *E*. *coli* as in Test Solution #1. This dilution resulted in a concentration of carbon nanotubes in Test Solution #2 of 625 ppm.

Both Test Solutions #1 and #2 were simultaneously sonicated with a Branson-2510 Sonicator for 3 min. These Test Solutions were then centrifuged in a commercially available centrifuge at 2500 rpm for 2 minutes to form pellets, and the supernatant decanted leaving 1 ml of supernatant behind. The pellets of Test Solutions #1 and #2 were then used to make two samples (#1 and #2) described below.

### Preparation of Sample #1: Carbon Nanotube Free

Sample #1 was prepared by placing a drop of the test solution free of carbon nanotubes (Test Solution #1) on a commercially available glass microscope slide (American Scientific Products, Micro Slides, plain, Cat. M6145, size 75 x 25 mm that was cleaned with sulfuric acid and rinsed with distilled water) and refrigerated at 4°C for 19 hours. After refrigeration, atomic force microscopy (AFM) analysis was performed (without fixation) using a Veeco Dimension 3100 Scanning Probe System in tapping mode to investigate the sample.

Sample #1 was also thermally fixed (by brief exposure to an open flame) and then stained (with Gram Crystal Violet dye) followed by a water wash. Light microscopy was performed using an Olympus light microscope at 1000x magnification and under immersion oil. Digital images were made with an Olympus DP10 CCD.

### Preparation of Sample #2: Carbon Nanotube Treated

Sample #2 was prepared by placing (and smearing) a drop of the carbon nanotube/*E. coli* test solution (Test Solution #2) on a glass microscope slide as described above. The sample was thermally fixed, stained, and light microscopy was conducted as for Sample #1 above. Sample #2 was then placed in a refrigerator at 4°C for 19 hours, after which time it was removed and AFM analysis (as described above) was conducted as for Sample #1. Sample #2 was returned to the refrigerator for an additional 24 hours, after which time light microscopy was again conducted.

### Results of Microscopic Analyses

Sample #1 (suspension of bacteria without carbon nanotubes) showed *E*. *coli* bacterial cells uniformly distributed over the entire surface of the slide. The image further shows that the bacteria had well-defined edges, suggesting that the bacteria cells were intact. No changes in their shape were found after 2 days stored in a dry state in the refrigerator.

The results for samples from the carbon nanotube treated test solution (Sample #2) demonstrated bacteria clumped on the carbon nanotubes. The majority of the nanotubes were removed when the excess stain was washed from the slide. Bacteria concentration was observed at boundaries of the carbon nanotubes.

There were numerous individual bacterial cells present over the entire slide for the sample without carbon nanotubes (Sample #1) bacterial cells were absent from most of the slide for the sample with carbon nanotubes (Sample #2). Any bacteria that were present in the latter case were tightly packed around the carbon nanotubes, indicating that the carbon nanotubes were capturing and holding the bacteria.

Sample #1 demonstrated *E*. *coli* closely packed together. The bacterial cells of normal cells have sharp boundaries. The decrease in size and packing density of bacteria was seen in the AFM image of sample #1 before heat treatment and optical image of this sample after heat treatment.

Sample #2 showed some cells in the vicinity of the nanotubes, with the boundary of the *E*. *coli cell* walls being diffused and/or damaged. In fact, after mixing with the nanotubes, some of the *E*. *coli cells* disintegrated beyond the point of recognition. The presence of some diffused *E. coli* fragments was also seen in the vicinity of the nanotubes.

On sonication of *E*. *coli* and functionalized carbon nanotubes in distilled water, the two components agglomerated. This is thought to be due to electrostatic and Van Der Waals forces which act at the nanoscale. To the limit of detection, it was observed that all bacteria in suspension were in contact with the nanotubes, and adhered. There were no longer free *E.coli* cells in Solution #2. This illustrated the ability of the dispersed carbon nanotubes to strongly attach to and immobilize bacteria.

The disintegration of the *E*. *coli* cells, when it was noted, appeared after the cells came into intimate contact with the nanotubes. As a result, these bacteria cells appeared to lose their sharp cell boundaries and their internal contents appeared to spill out from the cell.

In the cells affected, the beginning of this process was noted after 3 hours, and after 22 hours the internal contents spread so far that it was difficult to distinguish the shape of the cell. A highly motile bacterium, *Pseudomonas flourescens,* grown for 12 hours in nutrient broth (from Difco Laboratory) at room temperature, was mixed with a solution of carbon nanotubes.

Viewed under a dark field microscope, the motile bacteria were observed to swim near and get pulled into the aggregated carbon nanotubes and become firmly attached to the exposed carbon nanotube fibers. Within 5 minutes of contact, the entire surface of the carbon nanotube aggregate was covered with hundreds of intact bacteria, which were obviously firmly attached since they appeared to struggle, but were unable, to leave. These bacteria lost all motility and became completely rigid within 30 seconds of initial contact with carbon nanotube fibers. This indicated the capacity of the finely dispersed carbon nanotubes fibers to rapidly attach to and immobilize large numbers of bacteria. This confirms the basis for the effectiveness of carbon nanotube filters in removing microorganisms.

### EXAMPLE 2: Cylindrical Purification Article

### Construction of Cylindrical Purification Article

### a. Iron Hydroxide Treated Glass Fiber Preparation

A solution of 23.5 liters of distilled water and 9.62ml of 10N sodium hydroxide (NaOH) was made and stirred for 1 hour. A quantity of 16.66 grams of Ferric Chloride (FeCl₃•6H₂O) was added and stirred until a final pH of ~2.2 was reached (~24 hours). To this solution, 200 grams of glass fibers of size 100-500nm in diameter and 300-500µm in length (Johns-Mansville) were added and stirring was continued until solution was clear of iron (~3 hours). The solution was diluted with distilled water to obtain a glass fiber concentration of 10 grams/liter.

### b. Preparation of Depositional Suspension

A suspension was prepared using a solution of functionalized carbon nanotubes and iron hydroxide treated glass fibers previously prepared as described above. To prepare the component parts of the suspension, 5g of the functionalized carbon nanotubes (carboxylated through the nitric acid wash procedure described in Example #1) were suspended in 1 liter of water and placed in a room temperature water bath in a Cole Parmer 8851 Sonicator and sonicated at full power for 20 minutes. Four liters of distilled water were added to the sonicated, functionalized carbon nanotubes/water mixture to yield a concentration of 1 mg functionalized carbon nanotubes per 1 ml water. Approximately 100ml of Fe decorated glass fiber solution was placed in a separate container and diluted to 1 liter with distilled water. This mixture was blended in a commercial blender for 5 minutes.

To mix the first depositional suspension, 600 ml of the suspended functionalized carbon nanotubes (described above) were added to 960 ml of the glass fiber solution (5:8 CNT/glass ratio by weight). This mixture was diluted to 4 liters by adding a quantity sufficient amount of distilled water, and sonicated with a Branson model 900B probe Sonicator for 10 minutes on full power.

### c. Deposition of Carbon Nanomesh

The structure of the final nanomesh was achieved by depositing a layer of the functionalized carbon nanotubes/iron hydroxide coated glass fiber mixture onto a carbon block substrate.

The procedure for depositing the functionalized carbon nanotube/iron hydroxide coated or decorated glass mixture is described as follows. A filter assembly was made by loading a cylindrical carbon block onto a perforated mandrel. The deposition chamber was filled with the carbon nanotube/glass fiber suspension (5:8 ratio). The filter assembly was connected to vacuum tubing leading to a Franklin Electronics Varian TriScroll vacuum pump and then was submerged in the filled deposition chamber. The vacuum pump attached to the filter assembly was turned on and the entire suspension was drawn through the carbon filter substrate under vacuum, depositing a nanomesh on its outer surface. After deposition, the deposited filter assembly was removed from the deposition chamber, remained connected to the vacuum pump and the deposited nanomesh filter assembly was dried under vacuum for 1-2 hours in a drying oven set at 50° C within a nitrogen atmosphere.

The fully assembled filter article was comprised of a central carbon filter core coated with the functionalized carbon nanbtube nanomesh and covered by a porous protective paper held in place with cylindrical plastic netting. This cartridge was capped and the edges of the nanomesh sealed to prevent fluid circumventing the nanomesh and placed into an outer housing to create the final product.

### Effectiveness of Cylindrical Purification Article

As a fluid purification test of the cylindrical form of the inventive article on water contaminated was conducted with an *E. coli* bacterial culture [obtained from American Type Culture Collection (ATCC)].

A bacterial assay was conducted by challenging the nanomesh, made in accordance with the present example (Example 2), with a challenge fluid of reconstituted *E. coli* stock culture ATCC #25922. This challenge fluid was made by using a sterile biological loop (commercially available) to remove a loop full of the reconstituted stock and streaking it on a commercially available blood agar plate. This plate was then incubated for 12-18 hours at 36° C. The culture was then removed from the incubator and examined for purity.

Using a sterile biological loop (commercially available) one loop full of the incubated culture was removed and placed in 10 ml of sterile commercially available Tryptic soy broth (Remel cat. No. 07228). *E*. *coli was* then grown in the resulting trypticase-soy broth 18 hours at 37°C to form a culture of approximately 1x10⁹ colony forming units (cfu)/ml. A1 ml sample of this stock culture was added to 100 ml of water to be used for the challenge test, thereby diluting the concentration to approximately 1x10⁷ cfu/ml. The resulting challenge water was then passed through the Cylindrical Purification Article.

The test was performed in accordance with the *"Standard Methods for the Examination of Water and Waste Water*" cited above. Results of tests following the protocols described above established consistent removal of *E*. *coli* bacteria greater than 6 logs (>99.99995%) to greater than 7 logs (>99.999995%) when the challenge fluid was passed through the inventive nanomesh. These test results established removal rates which exceeded EPA potable water standards (referenced above) for removal of bacteria from water. The EPA standards dictate 6 logs removal (>99.99995%) of *E*. *coli* bacteria to achieve potable water. Improved purification by greater log removals of *E*. *coli* bacteria have been achieved in such tests, by passing a solution of known bacterial concentration (i.e. challenging) the nanomesh with higher concentrations of *E*. *coli* bacteria challenge suspension, made as described above. Such tests with higher concentrations confirm removal rates of greater than 7 log (>99.999995%). Independent tests of the nanomesh, using the test procedures described in this example, establish this material as a barrier to *E*. *coli* bacteria. Further, independent laboratory tests results showed more than 6 logs of removal of different test bacteria (*Klebsiella terrigena* and *Brevindomonas*), confirming that the material is a general barrier to bacteria.

### EXAMPLE 3: Fabrication of a Flat Purification Article

Analogously to Example 2, a flat nanomesh was made from commercially available purified carbon nanotubes and a non-woven, fused, polypropylene fabric substrate. To begin, 100 mg of functionalized carbon nanotubes (carboxylated through a nitric acid wash as described in Example #1) were then added to 400ml of commercially available neat isopropanol and sonicated in a "Branson 900B Ultrasonicator" at 80% power until the carbon nanotubes were well dispersed (about 10 minutes). The mixture was further diluted by adding 2 liters isopropanol such that the total volume of the resulting mixture was 2.4 liters. This diluted mixture was sonicated for an additional 10 minutes.

Next, 800 mg of a commercially available 200 nm diameter glass nano-fiber was homogenized in a commercially available blender at full power for 10 minutes in 500 ml of the commercially available neat isopropanol. The homogenized mixture was then diluted by adding an additional 1 liter of commercially available neat isopropanol.

The mixtures of carbon nanotubes and glass nano-fibers were combined and then quantity sufficient (Q.S.) amounts of isopropanol was added to obtain 4 liters. This 4 liter solution was then sonicated with a "Branson 900B Ultrasonicator" at 80% power for 15 minutes, which caused the carbon nanotube nanomaterial to uniformly disperse.

The entire 4 liter solution was then drawn through a commercially available 5 micron, non-woven, fused activated carbon fabric under a differential pressure of 1 atmosphere to deposit the carbon nanotube/treated glass fiber nanomesh. The resulting nanomesh was removed from the fabricator and allowed to dry in an oven at 50°C for 2 hrs.

The resulting flat, square nanomesh/substrate membrane is glued, using an NSF compliant hot-melt adhesive, into one side of a flat housing. This half of the housing is then mated and glued to its companion to seal.

### Test of Effectiveness of Flat Purification Article

### a. Water Contaminated with E. coli - Chemical Analysis

The following describes the results of a chemical analysis of filtrate from an *E*. *coli* challenge test, performed as described in Example 2, on the Flat Nanomesh Purification Article made in accordance with present example. This example provided some evidence for some amount of destruction of *E*. *coli* bacteria passing through the inventive nanomesh. This evidence of partial destruction of the contaminant (*E. coli* bacteria) was established by the presence of bacterial DNA and proteins in the challenge filtrate.

A challenge test was run following the same procedures as in Example 2, except that the composition of the challenge solution was ~1x10⁸ cfu/ml of *E*. *coli.* A total of 100 ml (total ~1x10¹⁰ cfu) of this challenge solution was drawn through the carbon nanomesh/substrate material using a differential pressure of ~0.25 psi. A control filtrate was obtained by passing the *E*. *coli* challenge filtrate through a commercially available 0.45 micron Millipore filter. The test challenge filtrate was not concentrated. The resulting filtrates, of the control and the challenge, were then analyzed with a commercially available spectra-photometer to determine the presence of protein and DNA. However, the analysis of the filtrate with a commercially available spectra-photometer revealed 40 µg/ml of DNA and 0.5 mg/ml of protein. Concentrations of protein and DNA at these levels in non-concentrated challenge filtrate were 6 times higher than the control test material obtained by filtration through a Millipore filter. These concentrations confirmed the destruction of at least some portion of the added E. *coli* by the nanomesh.

### b. Water Contaminated with MS-2 Bacteriophage Virus

The Flat Purification Article, made in accordance with the present example (Example 3) was tested with water contaminated by MS-2 bacteriophage virus using the procedure described above and in the "Standard Operating Procedure for MS-2 Bacteriophage Propagation/Enumeration, Margolin, Aaron, 2001, An EPA Reference Protocol." MS-2 bacteriophage virus is commonly used in assessing treatment capabilities of membranes designed for treating drinking water (NSF 1998). The pressurized challenges for this example were performed with 100 ml challenge solutions using the protocols described above. The MS-2 challenge materials were prepared in accordance with those steps enumerated above.

In this test, eighty (80) membranes comprised of the carbon nanotube nanostructured material made in accordance with the present example (Example 3), were challenged. The challenge material used was water contaminated with MS-2 bacteriophage virus to the concentration of approximately 5 x 10⁶ plaque forming unit (pfu)/ml.

Of the 80 units tested, 50 units achieved MS-2 removal of 5 logs (99.999%) or greater than 5 logs (>99.9995%). The remaining 30 units demonstrated 4 logs (99.99%) or greater than 4 logs (>99.995%) removal of MS-2. While EPA standards recommend 4 logs removal of MS-2 Bacteriophage to achieve potable water, it is believed that better sensitivity (higher log removal) can be achieved by challenging with higher log challenges of MS-2. Improved purification by greater log removals of MS-2 Bacteriophage have been achieved in such tests, by challenging the carbon nanotube nanomesh, made in accordance with the present example (Example 3), with higher concentrations of MS-2 Bacteriophage challenge suspension, made as set forth above. Independent tests of the carbon nanomesh article, made in accordance with the present example (Example 3), establish this material as a barrier to MS-2 Bacteriophage.

### c. Water Contaminated with Arsenic (As)

The Flat Purification Article, made in accordance with the present example (Example 3), with water contaminated with arsenic. In this test, a 100ml water solution containing ~150 ppb (parts per billion) arsenic was passed through the carbon nanomesh made in accordance with the present example (Example 3). A sample of the arsenic treated water was analyzed according to the EPA Method #SM 183113B. The analysis of the challenge filtrate confirm a reduction of the arsenic level by 86% ± 5%; after passing the challenge arsenic treated water, once through the inventive carbon nanomesh material.

### d. Aircraft Fuel Contaminated with Bacteria

The Flat Purification Article, made in accordance with the present example (Example 3), was tested for contaminated jet fuel. A sample of contaminated jet fuel (JP8) was obtained from a 33,000 gallon storage tank located at the United States Air Force Research facility at the Wright Patterson Air Force base. After collection, the sample was cultured on trypticase-soy agar and found to contain three types of bacteria: two *Bacillus* species and one *Micrococcus* species. The sample was separated in two containers of 2 liters each. Both containers presented two distinct layers, jet fuel on top and water on the bottom. Container A contained a heavy contaminated growth layer at the interface between the water and the fuel. Container B only showed slight contamination. The challenge test bacteria were obtained from the interface of the fuel and water from Container B.

After being homogenized, which was accomplished by shaking the challenge test fuel/water/bacteria vigorously for 1 minute, 200 ml of the fuel/water/bacteria challenge mixture was passed one time, using ~1.5 psi differential pressure, through the carbon nanotube, nanostructured material, made in accordance with the present example (Example 3).

The fuel/water/bacteria challenge filtrate sample was allowed to separate into its fuel - water components, and four test samples were obtained from each component. Each test sample was plated on agar. Samples were then incubated to analyze bacteria growth at 37°C and samples were incubated at room temperature to analyze mold growth. No bacteria or mold culture growth was observed on the challenge filtrate test plates after incubating the samples for 24 and 48 hours. The control samples presented vigorous colonies of bacteria and mold growth after incubation at 24 and 48 hours. The results confirm that the carbon nanomesh, made in accordance with the present example (Example 3), was a barrier to bacteria in fuel for it accomplished removal of bacteria and mold from the fuel beyond the limits of detection with testing protocols.

### EXAMPLE 4: Flat Purification Article using a Multistep Functionalization

A flat nanomesh device was made from commercially available, purified, carbon nanotubes and a non-woven, fused, 0.5 oz/yd² carbon tissue paper substrate. The construction of this device utilized a process of self assembly of the nanomesh, as defined above. Specific electropositive and electronegative functional components were used to enable this self assembly. The carbon nanotubes were functionalized with amine groups which caused them to be electropositive (i.e. positive zeta potential) when dispersed in water. The glass fibers were decorated with iron hydroxide clusters that caused them to be electronegative when dispersed in water. When the two suspensions were combined, the nanotubes wrapped around the glass fibers due to electrical forces.

To begin, 20g of carbon nanotubes were refluxed with 400 ml of 60% 36N sulfuric acid and 40% 15.8N nitric acid at 110°C for 30 minutes. This is known to add carboxyl functional groups to the carbon nanotubes. These carboxyl functionalized nanotubes were filtered, washed in distilled water and then dried in an oven at 100°C. The dry nanotubes were then suspended in 500 ml thionyl chloride and sonicated 20 hours at 60°C. The thionyl chloride was distilled off and the carbon nanotube sample was dehydrated using a vacuum pump. The dehydrated nanotubes were suspended in 500ml of ethylenediamine and sonicated for 20 hours at 60°C in a nitrogen atmosphere. The ethylenediamine was distilled off and the sample washed with 0.1 M hydrochloric acid, filtered and rinsed repeatedly with distilled water until a neutral pH is reached. The rinsed amine functionalized carbon nanotubes were then dried in an oven at 100°C for 24 hours.

A mixture of 360 mg of amine functionalized carbon nanotubes and 960 mg of treated glass fibers were combined and then a quantity sufficient (Q.S.) amount of distilled water was added to obtain 4 liters. This 4 liter solution was then sonicated with a "Branson 900B Ultrasonicator" at 80% power for 15 minutes, which caused the carbon nanotube/glass fiber nanomaterial to uniformly disperse.

The entire 4 liter solution was then drawn through a commercially available, non-woven, fused, 0.5 oz/yd² carbon tissue under a differential pressure of ~1 atmosphere to deposit the self-assembled, carbon nanotube/treated glass fiber nanomesh. The resulting nanomesh was removed from the fabricator and allowed to dry in an oven at 50°C for 2 hours.

The resulting flat, square nanomesh/substrate membrane is glued, using an NSF compliant hot-melt adhesive, into one side of a flat housing. This half of the housing is then mated and glued to its companion to seal.

### Test of Effectiveness of Flat Purification Article

The flat purification device constructed in the present example (Example #4) using the amine functionalized carbon nanotubes and iron hydroxide decorated glass fibers was tested for biological removal as in described in the Tests of Effectiveness for Example #3 [test a) *E. coli* and b) MS-2 bacteriophage]. These tests demonstrated that the self-assembled nanomesh article achieved a removal capability for bacteria and virus of over 8 logs and 7 logs, respectively.

### EXAMPLE 5: Fluid Desalination

A 64 layer, flat nanomesh device was made from: commercially available purified, functionalized carbon nanotubes; glass fibers measuring 100-500nm in diameter and 300-500µm in length; a solution of 0.0125% by weight of polyvinyl alcohol with a molecular weight of 20,000g in distilled water; 1.5 oz/yard cellulose filter paper as an insulator; a non-woven, fused, 0.5 oz/yard² conductive carbon tissue paper substrate; silver-imbedded conductive and insulating epoxies; a plastic, non-conductive housing; and a power supply to supply 1.5V DC across each neighboring pair of conducting nanomesh layers.

To begin, 25 mg of functionalized nanotubes (carboxylated through a nitric acid wash procedure as described in Example #1) and 50mg of glass fiber (described above) were suspended in 4 liters of distilled water containing a 0.0125% concentration of polyvinyl alcohol as listed above. The suspension was stirred for 3 minutes using an IKA UltraTurrax T18 immersion blender at speed 3.

This carbon nanotube/glass fiber suspension was deposited on a 5"x5" area of a 5.5"x5.5" sheet of 0.5 oz/yard² carbon tissue paper using differential pressure of ~1 psi. Four 2" diameter discs were cut from this 5"x5" nanomesh sheet, thereby completing 4 layers of the 64 layer, 2" diameter device (32 of the 64 layers are conductive, the others are insulating).

An electrical lead was attached to each conductive nanomesh layer using a silver-filled conductive epoxy. All conductive nanomesh layers were sandwiched between insulating layers and these "sandwiches" were then stacked with the electrical leads being equally spaced azimuthally (i.e. rotated ~11.25° from the leads on the layer above and below). The electrical leads were bundled and routed through the plastic housing wall to the power supply and the entire assembly was sealed.

A static retention test was performed by flowing 1 liter of a 1‰ saline solution (1‰ = 1g salt/1000g water) through the device with no electrical charge or stimulation imposed. The filtrate was tested for salt content and it was found to have lost ~13mg of salt. Therefore the inventive device in static mode (i.e. no electronic stimulation) reduced the salinity by ~1.3%. This reduction amounted to 0.42 grams of salt removed per gram of carbon nanotubes in the inventive device.

A dynamic retention test was performed, wherein a differential DC voltage of 4.0mV was applied to each of 16 neighboring pairs of conductive nanomesh layers (i.e. even numbered nanomesh layers were positively charged and odd numbered layers were negatively charged). A saline challenge solution of 1 g of sodium chloride dissolved in 1000 ml of distilled water (1‰ salinity) was used to test the efficacy of the device. In one pass through the device, 1.6% of the salt was removed. This removal rate was equivalent to 0.52 g of salt per g of carbon nanotubes. This represented a 23% increase in salt removal over the static device, showing that even a very weak voltage enhanced the removal of salt ions from a water solution, thereby demonstrating the nano-electric removal effect. Further enhancement of the salt removal will certainly be achieved as the DC voltages are increased and AC signals, which disrupt the DeBye atmosphere, are imposed.

### EXAMPLE 6: Air Membrane

A flat air membrane filter was constructed using functionalized carbon nanotubes (carboxylated through the nitric acid wash as described in Example #1). The procedure suspended 25mg of these functionalized nanotubes in 25ml of distilled water and sonicated for 10 minutes in a Branson Model 900B Sonicator in a water bath at room temperature. This solution was then diluted to 4 liters with distilled water and polyvinyl alcohol was added so that a concentration of 0.125% polyvinyl alcohol by weight was achieved. The suspension was then mixed for 3 minutes at speed setting 3 with an UltraTurrax T18 Basic immersion blender. The nanomesh was created by deposition on a 5"X5" area of a 5.25"X5.25" square piece of porous, polymeric substrate using a differential pressure filtration process with a differential pressure of ~1 psi.

### Test of Effectiveness of Air Membrane Article

Biological removal testing was performed on the membrane to determine its effectiveness. Two 2.5" discs were cut from the square membrane and were mounted between two flat metal rings of 2" ID, 2.5" OD. One disc was used to measure the pressure drop versus flow speed curves for the membrane article device, while the other was used for biological removal testing. The bio-removal testing was done by mounting the filter disc in a 2" ID cylindrical wind tunnel which was capable of testing the capture efficiency of bacterial spores of *Bacillus subtilis,* a widely accepted surrogate for biological agents but not a human pathogen, making it safe for laboratory testing.

The testing entailed releasing the bacterial spores upstream of the filter disc through an aerosolizer and capturing the fraction that passed through the filter in a fluid-filled, all-glass impinger at the downstream end of the testing apparatus. A controlled set of experiments were performed to estimate the spore retention of the testing apparatus. In this biological testing, we achieved over 6 logs of removal of *Bacillus subtilis* spores: Further, we were able to determine that removal of biological agents is independent of the removal of non-biological particles and of the filter's resistance to air flow.

### EXAMPLE 7: Reel-to-Reel Manufacturing Process

The example is related to a process for making a nanostructured material according to the present disclosure. This example describes the pre-processing of each component material, their combination in the carrier fluid, and the deposition of the carrier fluid onto and through a moving substrate. Post treatment of the deposited nano-structured material and testing of the performance of the nano-structured material is also described.

### Pre-Processing of Component Materials

### a. Carbon nanotubes

The carbon nanotubes were treated with nitric acid solution to remove contaminants, such as amorphous carbon, which may interfere with the surface chemistry of the nanotube. This treatment step also was performed to increase the number of crystalline defect sites in the nanotubes and to attach carboxyl chemical group to these defect sites. A 75g batch of functionalized nanotubes was created from several smaller batches. In these smaller batches, the treatment was performed by mixing 20mg of purified nanotubes suspended in 600 ml of distilled water with a total volume of 450ml of 70% concentrated nitric acid.

This mixture was poured into a glass beaker which was then placed in a 70°C sonication bath and stirred for 30 minutes. The nitric acid/carbon nanotube mixture was then poured into a Buchner funnel and the acid was drawn off of the carbon nanotubes using vacuum filtration. These nitric acid treated carbon nanotubes were then water washed 3-4 times with distilled water (roughly 4 liters total volume was used) until the pH was at about 5.5. They were then suspended in 75 liters of reverse osmosis treated water. The functionalized carbon nanotube mixture was processed through a Microfluidics high-pressure disperser using a 75µm diameter dispersing head and 10 kPsi pressure drop to break up nanotube agglomerations.

### b. Glass Fibers

A mixture containing 600g of glass fibers was prepared from Johns-Manville Code 90 glass fibers suspended in 120 liters of reverse osmosis treated water and stirred for 60 minutes. This fiber mixture was passed through a Silverson Model 200L High Shear In-Line Mixer operating at 75 Hz with a general purpose disintegrating head. These glass fibers were coated with a thin iron hydroxide coating by adding to the mixture a 1 liter solution containing 220g of Fe(NO₃)₃·9H₂O. This mixture was stirred well until the color equalized and the pH was recorded. This mixture was then covered and allowed to age for 60 hours under constant stirring.

A 4 liter solution of 0.50N sodium hydroxide was prepared and added automatically at a rate of 2 ml/min to the iron/glass mixture using a Millipore Waters Model 520 pump for 24 hours. This titration was continued until a pH of 3.95±0.05 was reached. At this point the titrated solution was allowed to age for another 2 days to complete the Iron (III) Hydroxide coating procedure. The final pH value after the additional aging period was 4.60±0.05.

### Preparation of Suspension and Dispersion

After pre-processing, the component materials were combined as follows. A suspension was prepared using the functionalized carbon nanotubes and iron hydroxide treated glass fibers mixtures prepared as described above. To mix the depositional suspension, 75 liters of the 1 gram/liter functionalized carbon nanotube suspension was added to 120 liters of the 5 gram/liter glass fiber solution and passed through a Greerco model AEHNXU X0022 in-line, dual-head, high-shear mixer to obtain 195 liters of a 1:8 nanotube to glass ratio (by weight) suspension.

### Deposition Of Carbon Nanotubes And Glass Fibers

Sonication was used to achieve and/or maintain adequate dispersion of the fiber/carbon nanotube suspension on its path to the depositional head-box of the reel-to-reel nano-material production equipment. The combined carbon nanotube/glass fiber suspension prepared as described above was pumped through a static, Archimedes-screw type mixing element and then sequentially through Advanced Sonics 4kW and 20kW, 16/20 kHz dual frequency, in-line Sonicators at a flow rate of 12 gal/min using a Seepex model 12F-90 U4 CUS progressive cavity pump.

After being prepared, the fiber/carbon nanotube suspension was supplied to the head box of a 18" wide Fordrinier type paper making machine running at 20 feet/minute. This suspension was deposited upon a substrate composed of Blue Thunder Novatech-1000 substrate material and the resulting material was covered with Reemay 2014 spunbond as protection for subsequent machine and manual handling and rolling. No post-treatment was performed.

## Claims

1. A continuous or semi-continuous method of making a nanostructured material comprising carbon nanotubes, said method comprising:
suspending carbon nanotubes in a carrier fluid to form a mixture,
inducing said mixture to flow through a moving substrate that is permeable to the carrier fluid by differential pressure filtration,
depositing said carbon nanotubes from said mixture onto said moving substrate, and
applying a vacuum to the side of the substrate opposite of the deposition side to remove said carrier fluid, to form a nanostructured material whose components have an arrangement that has at least one characteristic length scale that is 100 nanometers or less.

2. The method of claim 1, wherein said carrier fluid comprises components other than carbon nanotubes.

3. The method of claim 1, wherein said substrate forms a part of said nanostructured material or wherein the method further comprises removing said substrate from said nanostructured material.

4. The method of any preceding claim, wherein said substrate is comprised of fibrous or non-fibrous materials, said fibrous or non-fibrous materials optionally comprising metals, polymers, ceramic, natural fibres and combinations thereof, wherein said materials are optionally heat and/or pressure treated prior to said depositing of the carbon nanotubes.

5. The method of any preceding claim, wherein said carrier fluid is comprised at least one liquid, or gas, or combinations thereof.

6. The method of claim 5, wherein said carrier fluid is a dispersant chosen from aqueous and non-aqueous liquids.

7. The method of claim 6, wherein said carrier fluid is an aqueous liquid having a pH ranging from 1 to 8.9.

8. The method of any one of claims 1 to 5, wherein said carrier fluid further comprises at least one aqueous or non-aqueous solvent or combinations thereof, wherein, for example, said non-aqueous solvent comprises an organic or inorganic solvents, wherein said organic solvents are chosen from methanol, iso-propanol, ethanol, toluene, xylene, dimethylformamide, carbon tetrachloride, 1,2-dichlorobenzene, and combinations thereof.

9. The method of any one of claims 2 to 8, wherein said other components
a) comprise fibres, clusters and/or particulates composed of metals, polymers, ceramics, natural materials and combinations thereof, optionally wherein said other components have at least one dimension ranging from In to 100nm; and/or
b) are comprised of molecules containing atoms chosen from antimony, aluminum, barium, boron, bromine, calcium, carbon, cerium, chlorine, chromium, cobalt, copper, fluorine, gallium, germanium, gold, hafnium, hydrogen, indium, iodine, iridium, iron, lanthanum, lead, magnesium, manganese, molybdenum, nickel, niobium, nitrogen, osmium, oxygen, palladium, phosphorus, platinum, rhenium, rhodium, ruthenium, scandium, selenium, silicon, silver, sulfur, tantalum, tin, titanium, tungsten, vanadium, yttrium, zinc, zirconium, or combination thereof; and/or
c) are pre-assembled and attached onto the carbon nanotubes, to other components, or to any combination thereof prior to said deposition.

10. The method any preceding claim, wherein said carrier fluid further comprises
a) chemical binding agents, surfactants, buffering agents, poly-electrolytes and combinations thereof; and/or
b) biomaterials chosen from proteins, DNA, RNA and combinations thereof.

11. The method of claim 10, wherein said chemical binding agents comprise polyvinyl alcohol.

12. The method of any preceding claim, further comprising forming a multilayered structured by the sequential deposition of at least one nanostructured material comprising carbon nanotubes, and at least one additional layer that may or may not be nanostructured.

13. The method of any preceding claim, wherein said carrier fluid is a gas comprised of air, nitrogen, oxygen, argon, carbon dioxide, water vapour, helium, neon, or any combination thereof.

14. The method of any preceding claim, further comprising
a) applying an acoustic field having a frequency ranging from 10 kHz to 50 kHz to obtain or maintain dispersion of the carbon nanotubes in the carrier fluid prior to said depositing;
b) applying a high-shear flow field to said carrier fluid to disperse and or mix the carbon nanotubes in the carrier fluid prior to depositing; or
c) applying an acoustic field having a frequency ranging from 10 kHz to 50 kHz and a high-shear flow field, either sequentially or in combination, to obtain or maintain dispersion of the carbon nanotubes in the carrier fluid prior to depositing.

15. The method of any preceding claim, further comprising treating the nanostructured material with at least one post-deposition treatment chosen from chemical treatment, irradiation, or combinations thereof.

16. The method of claim 15, wherein said chemical treatment comprises
(a) adding a functional group,
(b) coating with a polymeric or metallic material, or a combination of (a) and (b) and/or wherein said irradiation comprises exposing the nanostructured material to radiation chosen from infrared radiation, electron-beams, ion beams, x-rays, photons, or any combination thereof.

17. The method of any preceding claim, further comprising finishing said nanostructured material with at least one method chosen from cutting, laminating, sealing, pressing, wrapping, or combinations thereof.

18. The method of any one of claims 1 to 17, wherein the method is to form a nanostructured material having a length greater than 1 meter.

19. The method of claim 18, wherein said nanostructured material has a length ranging from greater than 1 meter up to 10,000 metres.

20. The method of claim 18, further comprising gathering the nanostructured material on a take-up reel.

21. The method of any preceding claim, wherein the nanostructured material is for filtering at least one contaminated fluid and wherein glass fibres are suspended in the carrier fluid with the carbon nanotubes.

22. The method of claim 21, wherein said glass fibres are coated with metal-oxygen compounds chosen from metal hydroxide Mₓ(OH)_{y}, oxyhydroxides MₓO_{y}(OH)_{z}, oxide MₓO_{y}, oxy-, hydroxy-, oxyhydroxy salts MₓO_{y}(OH)_{z}Aₙ.

23. The method of claim 22, wherein M is at least one cation chosen from Magnesium, Aluminum, Calcium, Titanium, Manganese, Iron, Cobalt, Nickel, Copper, Zinc or combination of thereof and/or wherein A is at least one anion chosen from Hydride, Fluoride, Chloride, Bromide, Iodide, Oxide, Sulfide, Nitride, Sulfate, Thiosulfate, Sulfite, Perchlorate, Chlorate, Chlorite, Hypochlorite, Carbonate, Phosphate, Nitrate, Nitrite, Iodate, Bromate, Hypobromite, Boron, or combination of thereof.

24. The method of claim 21, wherein said method is operated in a continuous or semi-continuous manner to form a nanostructured material having a length ranging from 1 metre to 1000 metres.

25. The method of any one of claims 18 to 24, wherein said fluid comprises:
(a) a liquid chosen from water, petroleum and its byproducts, biological fluids, foodstuffs, alcoholic beverages and pharmaceuticals,
(b) a gas chosen from air, industrial gases and exhaust from a vehicle, smoke stack, chimney, or cigarette, wherein said industrial gases comprise argon, nitrogen, helium, ammonia and carbon dioxide; or
combinations of (a) and (b).

## Patentansprüche

1. Kontinuierliches oder halbkontinuierliches Verfahren des Herstellens eines nanostrukturierten Materials, welches Kohlenstoff-Nanoröhren umfasst, welches Verfahren umfasst:
Suspendieren von Kohlenstoff-Nanoröhren in einem Trägerfluid, um ein Gemisch zu bilden,
Veranlassen des Gemisches, durch ein sich bewegendes Substrat zu fließen, das gegenüber dem Trägerfluid durchlässig ist, durch Differenzdruckfiltration,
Ablagern der besagten Kohlenstoff-Nanoröhren von besagtem Gemisch auf besagtem sich bewegenden Substrat, und
Anwenden eines Vakuums auf die Seite des Substrats gegenüber der Ablagerungsseite, um besagtes Trägerfluid zu entfernen, um ein nanostrukturiertes Material zu bilden, dessen Bestandteile eine Anordnung haben, die mindestens eine charakteristische Längenskala hat, die 100 Nanometer oder weniger ist.

2. Verfahren nach Anspruch 1, wobei besagtes Trägerfluid andere Bestandteile als Kohlenstoff-Nanoröhren umfasst.

3. Verfahren nach Anspruch 1, wobei besagtes Substrat einen Teil des besagten nanostrukturierten Materials bildet, oder wobei das Verfahren ferner Entfernen des besagten Substrats von besagtem nanostrukturierten Material umfasst.

4. Verfahren nach einem vorangehenden Anspruch, wobei besagtes Substrat aus faserförmigen oder nicht-faserförmigen Materialien besteht, wobei besagte faserförmigen oder nicht-faserförmigen Materialien gegebenenfalls Metalle, Polymere, Keramik, natürliche Fasern und Kombinationen daraus umfassen, wobei besagte Materialien gegebenenfalls vor besagter Ablagerung der Kohlenstoff-Nanoröhren wärme- und/oder druckbehandelt werden.

5. Verfahren nach einem vorangehenden Anspruch, wobei besagtes Trägerfluid mindestens eine Flüssigkeit oder ein Gas oder Kombinationen daraus umfasst.

6. Verfahren nach Anspruch 5, wobei besagtes Trägerfluid ein Dispersionsmittel ist, ausgewählt aus wässerigen und nicht-wässerigen Flüssigkeiten.

7. Verfahren nach Anspruch 6, wobei besagtes Trägerfluid eine wässerige Flüssigkeit mit einem pH im Bereich von 1 bis 8,9 ist.

8. Verfahren nach einem von Ansprüchen 1 bis 5, wobei besagtes Trägerfluid ferner mindestens ein wässeriges oder nicht-wässerigen Lösungsmittel oder Kombinationen daraus umfasst, wobei zum Beispiel besagtes nicht-wässeriges Lösungsmittel ein organisches oder anorganische Lösungsmittel umfasst, wobei besagte organische Lösungsmittel ausgewählt sind aus Methanol, Isopropanol, Ethanol, Toluol, Xylol, Dimethylformamid, Tetrachlorkohlenstoff, 1,2-Dichlorbenzol und Kombinationen daraus.

9. Verfahren nach einem von Ansprüchen 2 bis 8, wobei besagte andere Bestandteile
a) Fasern, Cluster und/oder Teilchen, bestehend aus Metallen, Polymeren, Keramiken, natürlichen Materialien und Kombinationen daraus umfassen, gegebenenfalls wobei besagte andere Bestandteile mindestens eine Dimension im Bereich von 1 nm bis 100 nm haben; und/oder
b) aus Molekülen bestehen, welche Atome enthalten, ausgewählt aus Antimon, Aluminium, Barium, Bor, Brom, Calcium, Kohlenstoff, Cer, Chlor, Chrom, Kobalt, Kupfer, Fluor, Gallium, Germanium, Gold, Hafnium, Wasserstoff, Indium, Iod, Iridium, Eisen, Lanthan, Blei, Magnesium, Mangan, Molybdän, Nickel, Niob, Stickstoff, Osmium, Sauerstoff, Palladium, Phosphor, Platin, Rhenium, Rhodium, Ruthenium, Scandium, Selen, Silicium, Silber, Schwefel, Tantal, Zinn, Titan, Wolfram, Vanadium, Yttrium, Zink, Zirkonium oder Kombinationen daraus; und/oder
c) vor besagter Ablagerung vormontiert und gebunden sind an die Kohlenstoff-Nanoröhren, an andere Bestandteile oder an eine Kombination daraus.

10. Verfahren nach einem vorangehenden Anspruch, wobei besagtes Trägerfluid ferner
a) chemische Bindemittel, Surfactanten, Puffermittel, Polyelektrolyte und Kombinationen daraus; und/oder
b) Biomaterialien, ausgewählt aus Proteinen, DNA, RNA und Kombinationen daraus
umfasst.

11. Verfahren nach Anspruch 10, wobei besagte chemische Bindemittel Polyvinylalkohol umfassen.

12. Verfahren nach einem vorangehenden Anspruch, welches ferner Bilden einer Mehrfachschicht, strukturiert durch die aufeinander folgende Ablagerung von mindestens einem nanostrukturierten Material, umfassend Kohlenstoff-Nanoröhren, und mindestens einer zusätzlichen Schicht, die nanostrukturiert sein kann oder nicht, umfasst.

13. Verfahren nach einem vorangehenden Anspruch, wobei besagtes Trägerfluid ein Gas ist, bestehend aus Luft, Stickstoff, Sauerstoff, Argon, Kohlendioxid, Wasserdampf, Helium, Neon oder jeder Kombination daraus.

14. Verfahren nach einem vorangehenden Anspruch, welches ferner umfasst:
a) Anwenden eines akustischen Felds mit einer Frequenz im Bereich von 10 kHz bis 50 kHz, um Dispersion der Kohlenstoff-Nanoröhren im Trägerfluid vor besagter Ablagerung zu erhalten oder beizubehalten;
b) Anwenden eines Hochscher-Strömungsfelds auf besagtes Trägerfluid, um die Kohlenstoff-Nanoröhren im Trägerfluid vor Ablagerung zu dispergieren und oder zu mischen; oder
c) Anwenden eines akustischen Felds mit einer Frequenz im Bereich von 10 kHz bis 50 kHz und eines Hochscher-Strömungsfelds entweder nacheinander oder in Kombination, um Dispersion der Kohlenstoff-Nanoröhren im Trägerfluid vor Ablagerung zu erhalten oder beizubehalten.

15. Verfahren nach einem vorangehenden Anspruch, welches ferner Behandeln des nanostrukturierten Materials mit mindestens einer Nachablagerungsbehandlung umfasst, ausgewählt aus chemischer Behandlung, Bestrahlung oder Kombinationen daraus.

16. Verfahren nach Anspruch 15, wobei besagte chemische Behandlung
(a) Zugeben einer funktionellen Gruppe,
(b) Beschichten mit einem polymeren oder metallischen Material, oder eine Kombination aus (a) und (b) umfasst, und/oder wobei besagte Bestrahlung Aussetzen des nanostrukturierten Materials unter Bestrahlung, ausgewählt aus Infrarotbestrahlung, Elektronenstrahlen, Ionenstrahlen, Röntgenstrahlen, Photonen oder einer Kombination daraus umfasst.

17. Verfahren nach einem vorangehenden Anspruch, welches ferner Fertigbearbeiten des besagten nanostrukturierten Materials mit mindestens einem Verfahren umfasst, ausgewählt aus Schneiden, Laminieren, Versiegeln, Pressen, Wickeln oder Kombinationen daraus.

18. Verfahren nach einem von Ansprüchen 1 bis 17, wobei das Verfahren ist, ein nanostrukturiertes Material mit einer Länge von mehr als 1 Meter zu bilden.

19. Verfahren nach Anspruch 18, wobei besagtes nanostrukturiertes Material eine Länge im Bereich von mehr als 1 Meter bis zu 10000 Metern hat.

20. Verfahren nach Anspruch 18, welches ferner Sammeln des nanostrukturierten Materials auf einer Aufwickelspule umfasst.

21. Verfahren nach einem vorangehenden Anspruch, wobei das nanostrukturierte Material zum Filtrieren von mindestens einem verunreinigten Fluid ist und wobei Glasfasern im Trägerfluid mit den Kohlenstoff-Nanoröhren suspendiert sind.

22. Verfahren nach Anspruch 21, wobei besagte Glasfasern mit Metall-Sauerstoff-Verbindungen beschichtet sind, ausgewählt aus Metallhydroxid Mₓ(OH)_{y}, Oxyhydroxiden MₓO_{y}(OH)_{z}, Oxid MₓO_{y}, Oxy-, Hydroxy-, Oxyhydroxysalzen MₓO_{y}(OH)_{z}Aₙ.

23. Verfahren nach Anspruch 22, wobei M mindestens ein Kation ist, ausgewählt aus Magnesium, Aluminium, Calcium, Titan, Mangan, Eisen, Kobalt, Nickel, Kupfer, Zink oder Kombinationen daraus, und/oder worin A mindestens ein Anion ist, ausgewählt aus Hydrid, Fluorid, Chlorid, Bromid, Iodid, Oxid, Sulfid, Nitrid, Sulfat, Thiosulfat, Sulfit, Perchlorat, Chlorat, Chlorit, Hypochlorit, Carbonat, Phosphat, Nitrat, Nitrit, Iodat, Bromat, Hypobromit, Bor oder Kombinationen daraus.

24. Verfahren nach Anspruch 21, wobei besagtes Verfahren auf eine kontinuierliche oder halbkontinuierliche Weise betrieben wird, um ein nanostrukturiertes Material mit einer Länge im Bereich von 1 Meter bis 1000 Metern zu bilden.

25. Verfahren nach einem von Ansprüchen 18 bis 24, wobei besagtes Fluid umfasst:
(a) eine Flüssigkeit, ausgewählt aus Wasser, Petroleum und seinen Nebenprodukten, biologischen Fluiden, Nahrungsmitteln, alkoholischen Getränken und Pharmazeutika,
(b) ein Gas, ausgewählt aus Luft, Industriegasen und Abgasen von einem Vehikel, Schornstein, Kamin oder einer Zigarette, wobei besagte Industriegase Argon, Stickstoff, Helium, Ammoniak und Kohlendioxid umfassen; oder
Kombinationen aus (a) und (b).

## Revendications

1. Procédé continu ou semi-continu de fabrication d'un matériau de nanostructure comprenant des nanotubes de carbone, ledit procédé comprenant :
la suspension de nanotubes de carbone dans un fluide porteur pour former un mélange,
l'induction dudit mélange pour qu'il traverse un substrat mobile qui est perméable au fluide porteur par filtration de pression différentielle,
le dépôt desdits nanotubes de carbone dudit mélange sur ledit substrat mobile, et
l'application d'une dépression au côté du substrat opposé au côté de dépôt pour enlever ledit fluide porteur afin de former un matériau de nanostructure dont les composants ont un agencement ayant au moins une échelle de longueur caractéristique de 100 nm ou moins.

2. Procédé selon la revendication 1, dans lequel ledit fluide porteur comprend des composants autres que des nanotubes de carbone.

3. Procédé selon la revendication 1, dans lequel ledit substrat fait partie dudit matériau de nanostructure ou dans lequel le procédé comprend en outre l'enlèvement dudit substrat dudit matériau de nanostructure.

4. Procédé selon l'une quelconque des revendications précédentes, dans lequel ledit substrat se compose de matériaux fibreux ou non fibreux, lesdits matériaux fibreux ou non fibreux comprenant facultativement des métaux, des polymères, des céramiques, des fibres naturelles et des combinaisons de ceux-ci, dans lequel lesdits matériaux sont facultativement traités par chaleur et/ou pression avant ledit dépôt des nanotubes de carbone.

5. Procédé selon l'une quelconque des revendications précédentes, dans lequel ledit fluide porteur se compose d'au moins un liquide ou un gaz ou de combinaisons de ceux-ci.

6. Procédé selon la revendication 5, dans lequel ledit fluide porteur est un dispersant choisi parmi des liquides aqueux et non aqueux.

7. Procédé selon la revendication 6, dans lequel ledit fluide porteur est un liquide aqueux ayant un pH de 1 à 8,9.

8. Procédé selon l'une quelconque des revendications 1 à 5, dans lequel ledit fluide porteur comprend en outre au moins un solvant aqueux ou non aqueux ou des combinaisons de ceux-ci, dans lequel, par exemple, ledit solvant non aqueux comprend un solvant organique ou inorganique, dans lequel ledit solvant organique est choisi parmi du méthanol, isopropanol, éthanol, toluène, xylène, diméthylformamide, tétrachlorure de carbone, 1,2-dichlorobenzène, et des combinaisons de ceux-ci.

9. Procédé selon l'une quelconque des revendications 2 à 8, dans lequel lesdits autres composants
a) comprennent des fibres, des grappes et/ou des particules composées de métaux, polymères, céramiques, matériaux naturels et combinaisons de ceux-ci, facultativement dans lequel lesdits autres composants ont au moins une dimension de 1 nm à 100 nm ; et/ou
b) se composent de molécules contenant des atomes choisis parmi antimoine, aluminium, baryum, bore, bromure, calcium, carbone, cérium, chlorure, chrome, cobalt, cuivre, fluor, gallium, germanium, or, hafnium, hydrogène, indium, iode, iridium, fer, lanthane, plomb, magnésium, manganèse, molybdène, nickel, niobium, azote, osmium, oxygène, palladium, phosphore, platine, rhénium, rhodium, ruthénium, scandium, sélénium, silicium, argent, soufre, tantale, étain, titane, tungstène, vanadium, yttrium, zinc, zirconium, ou des combinaisons de ceux-ci ; et/ou
c) sont préassemblés et attachés sur les nanotubes de carbone, à d'autres composants ou à toute combinaison de ceux-ci avant ledit dépôt.

10. Procédé selon l'une quelconque des revendications précédentes, dans lequel ledit fluide porteur comprend en outre
a) des agents de liaison chimiques, surfactants, agents tampons, polyélectrolytes et des combinaisons de ceux-ci ; et/ou
b) des biomatériaux choisis parmi des protéines, ADN, ARN et des combinaisons de ceux-ci.

11. Procédé selon la revendication 10, dans lequel lesdits agents de liaison chimiques comprennent de l'alcool de polyvinyle.

12. Procédé selon l'une quelconque des revendications précédentes, comprenant en outre la formation d'une structure multicouche par le dépôt séquentiel d'au moins un matériau de nanostructure comprenant des nanotubes de carbone et d'au moins une couche supplémentaire pouvant être ou pas de nanostructure.

13. Procédé selon l'une quelconque des revendications précédentes, dans lequel ledit fluide porteur est un gaz composé d'air, azote, oxygène, argon, dioxyde de carbone, vapeur d'eau, hélium, néon ou toute combinaison de ceux-ci.

14. Procédé selon l'une quelconque des revendications précédentes, comprenant en outre
a) l'application d'un champ acoustique ayant une fréquence de 10 kHz à 50 kHz pour obtenir ou maintenir une dispersion des nanotubes de carbone dans le fluide porteur avant ledit dépôt ;
b) l'application d'un champ d'écoulement à fort cisaillement au dit fluide porteur pour disperser et/ou mélanger les nanotubes de carbone dans le fluide porteur avant le dépôt ; ou
c) l'application d'un champ acoustique ayant une fréquence de 10 kHz à 50 kHz et un champ d'écoulement à fort cisaillement, soit séquentiellement soit en combinaison, pour obtenir ou maintenir une dispersion des nanotubes de carbone dans le fluide porteur avant le dépôt.

15. Procédé selon l'une quelconque des revendications précédentes, comprenant en outre le traitement du matériau de nanostructure avec au moins un traitement après dépôt choisi parmi un traitement chimique, une irradiation ou des combinaisons de ceux-ci.

16. Procédé selon la revendication 15, dans lequel ledit traitement chimique comprend
(a) l'ajout d'un groupe fonctionnel,
(b) le revêtement avec un matériau polymérique ou métallique, ou une combinaison de (a) et (b) et/ou dans lequel ladite irradiation comprend l'exposition du matériau de nanostructure à un rayonnement choisi parmi un rayonnement infrarouge, des faisceaux d'électrons, des faisceaux d'ions, des rayons X, des photons ou toute combinaison de ceux-ci.

17. Procédé selon l'une quelconque des revendications précédentes, comprenant en outre la finition dudit matériau de nanostructure avec au moins un procédé choisi parmi le découpage, la stratification, le scellage, la pression, l'enveloppement ou des combinaisons de ceux-ci.

18. Procédé selon l'une quelconque des revendications 1 à 17, dans lequel le procédé est destiné à former un matériau de nanostructure ayant une longueur supérieure à 1 m.

19. Procédé selon la revendication 18, dans lequel ledit matériau de nanostructure a une longueur de plus de 1 m à 10 000 m.

20. Procédé selon la revendication 18, comprenant en outre le recueil du matériau de nanostructure sur une roue de récupération.

21. Procédé selon l'une quelconque des revendications précédentes, dans lequel le matériau de nanostructure est destiné à filtrer au moins un fluide contaminé et dans lequel des fibres de verre sont en suspension dans le fluide porteur avec les nanotubes de carbone.

22. Procédé selon la revendication 21, dans lequel lesdites fibres de verre sont revêtues de composés de métal-oxygène choisis parmi un hydroxyde de métal Mₓ(OH)_{y}, des oxyhydroxydes MₓO_{y}(OH)_{z}, un oxyde MₓO_{y}, et des sels d'oxyde, d'hydroxyde et d'oxyhydroxyde MₓO_{y}(OH)_{z}Aₙ.

23. Procédé selon la revendication 22, dans lequel M est au moins un cation choisi parmi du magnésium, aluminium, calcium, titane, manganèse, fer, cobalt, nickel, cuivre, zinc ou toute combinaison de ceux-ci et/ou dans lequel A est au moins un anion choisi parmi un hydrure, fluorure, chlorure, bromure, iodure, oxyde, sulfure, nitrure, sulfate, thiosulfate, sulfite, perchlorate, chlorate, chlorite, hypochlorite, carbonate, phosphate, nitrate, nitrite, iodate, bromate, hypobromite, bore ou toute combinaison de ceux-ci.

24. Procédé selon la revendication 21, dans lequel ledit procédé est employé de manière continue ou semi-continue pour former un matériau de nanostructure ayant une longueur de 1 m à 1000 m.

25. Procédé selon l'une quelconque des revendications 18 à 24, dans lequel ledit fluide comprend :
(a) un liquide choisi parmi l'eau, le pétrole et ses dérivés, des fluides biologiques, des liquides alimentaires, des boissons alcoolisées et des liquides pharmaceutiques,
(b) un gaz choisi parmi l'air, des gaz industriels et des gaz d'échappement d'un véhicule, un conduit de fumée, une cheminée ou une cigarette, dans lequel lesdits gaz industriels comprennent l'argon, l'azote, l'hélium, l'ammoniac et le dioxyde de carbone ; ou
des combinaisons de (a) et (b).
